# NOUVEAU FASCICULE DE BREVET EUROPEEN

(11) **EP 1 781 605 B2**
(45) Date de publication et mention de la décision concernant l'opposition: **01.04.2015**
(45) Mention de la délivrance du brevet: 26.05.2010
(21) Numéro de dépôt: 05742179.4
(22) Date de dépôt: 23.03.2005
(51) Int. Cl.: C07C 329/00, C08F 2/38

(54) **POLYMERES OBTENUS PAR UTILISATION DE COMPOSES SOUFRES COMME AGENTS DE TRANSFERT POUR LA POLYMERISATION RADICALAIRE CONTROLEE DE L" ACIDE ACRYLIQUE ET LEURS APPLICATIONS**
UNTER VERWENDUNG VON SCHWEFELVERBINDUNGEN IN FORM VON TRANSFERMITTELN FÜR DIE GESTEUERTE RADIKALISCHE POLYMERISATION VON ACRYLSÄURE HERGESTELLTE POLYMERE UND DEREN VERWENDUNG
POLYMERS PRODUCED BY USING SULPHUR COMPOUNDS IN THE FORM OF TRANSFER AGENTS FOR CONTROLLED RADICAL POLYMERISATION OF ACRYLIC ACID AND THE USE THEREOF

(30) Priorité: 28.07.2004 FR 0408307
(43) Date de publication de la demande: 09.05.2007
(73) Titulaire: COATEX S.A.S., 69730 Genay (FR)
(72) Inventeur: SUAU, Jean-Marc, F-69480 Lucenay (FR); JACQUEMET, Christian, F-69005 Lyon (FR)
(74) Mandataire: Fiorucci, Hélène
(86) Numéro de dépôt international: PCT/FR2005/000703
(87) Numéro de publication internationale: WO 2006/024706

(56) Documents cités:
- WO-A-01/60792
- WO-A-02/070571
- WO-A-03/055919
- DD-A- 217 214
- FR-A1- 2 821 620
- US-A- 5 432 238
- US-A1- 2004 097 674
- US-B1- 6 596 899
- US-B2- 7 462 676
- MAYADUNNE R T A ET AL: "Living polymers by the use of trithiocarbonates as reversible addition-fragmentation chain transfer (RAFT) agents: ABA triblock copolymers by radical polymerization in two steps" MACROMOLECULES, AMERICAN CHEMICAL SOCIETY. EASTON, US, vol. 33, 2000, pages 243-245, XP002244803 ISSN: 0024-9297
- LAI, J.T. ET AL.: "Functional polymers from novel carboxyl-terminated trithiocarbonates as highly efficient RAFT agents" MACROMOLECULES, vol. 35, no. 18, 2002, pages 6754-6756, XP002313952
- C. J. FERGUSON ET AL.: 'Communications to the Editor' MACROMOLECULES vol. 35, no. 25, 03 Décembre 2002, pages 9243 - 9245
- J. T. LAI ET AL.: 'Communications to the Editor' MACROMOLECULES vol. 35, no. 18, 2002, pages 6754 - 6756
- B. HOLMBERG: 'Estersäuren von schwefelsubstituierter Kohlensäure mit aliphatischen Alkoholsäuren' JOURNAL FÜR PRAKTISCHE CHEMIE no. 9, 1905, page 293
- J. LOISEAU ET AL.: 'Synthesis and Characterization of Poly(acrylic acid) Produced by RAFT Polymerization. Application as a Very Efficient Dispersant of CaCO3, Kaolin, and TiO2' MACROMOLECULES vol. 36, 2003, pages 3066 - 3077
- B. HOLMBERG: 'Arkiv Kemi, Mineral. Geol.', vol. 8, 17 Mars 1921 pages 1 - 17

## Description

L'invention concerne des homopolymères de l'acide acrylique et/ou des copolymères de l'acide acrylique avec d'autres monomères hydrosolubles obtenus par un procédé de polymérisation radicalaire contrôlée de type RAFT dans l'eau , utilisant comme agent de transfert des composés de formule (I'): 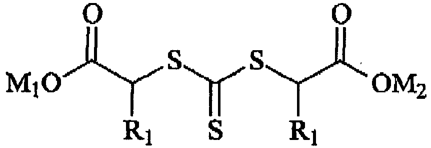
- où R₁ désigne un radical alkyle ayant de 1 à 10 atomes de carbone, un radical aromatique simple ou substitué par une chaîne alkyle ayant de 1 à 4 atomes de carbone ;
- et où M₁ et M₂ désignent l'atome d'hydrogène, un sel d'amine, l'ammonium ou un cation alcalin, et sont identiques ou différents.

Ces homopolymères de l'acide acrylique et/ou ces copolymères de l'acide acrylique avec d'autres monomères hydrosolubles sont caractérisés en ce qu'ils ont un indice de polymolécularité inférieur à 2,2 et contiennent en bout de chaîne un motif qui répond à la formule (I) : 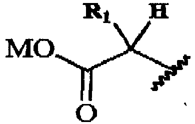
- où R₁ désigne un radical alkyle ayant de 1 à 10 atomes de carbone, un radical aromatique éventuellement substitué par une chaîne alkyl ayant de 1 à 4 atomes de carbone ;
- et où M désigne l'atome d'hydrogène, un sel d'amine, l'ammonium ou un cation alcalin.

La méthode MALDI TOF permet de mettre en évidence la présence du motif de formule (I) en bout de chaîne des polymères selon l'invention. Cette méthode est une technique d'analyse en temps de vol par spectrométrie de masse bien connue de l'homme du métier (« Controlled radical polymerization of acrylic acid in protic media », Macromolecules, 2001, 34, 5370 et « Synthesis and characterization of poly(acrylic acid) produced by RAFT polymerization : application as a very efficient dispersant of CaCO3, kaolin, and TiO2 », Macromolecules, 2003, 36, 3066).

L'invention concerne aussi l'utilisation comme agents d'aide au broyage et/ou d'aide au cobroyage de matières minérales dans l'eau, desdits homopolymères de l'acide acrylique et/ou desdits copolymères de l'acide acrylique avec d'autres monomères hydrosolubles.

L'invention concerne aussi l'utilisation comme agents de dispersion de matières minérales dans l'eau, desdits homopolymères de l'acide acrylique et/ou desdits copolymères de l'acide acrylique avec d'autres monomères hydrosolubles.

L'invention concerne aussi les suspensions aqueuses de matières minérales broyées et/ou cobroyées avec les polymères selon l'invention.
L'invention concerne aussi les dispersions aqueuses de matières minérales dispersées avec les polymères selon l'invention.

L'invention concerne aussi l'utilisation desdites dispersions et suspensions aqueuses de matières minérales, dans les formulations papetières, et notamment dans les sauces de couchage et les charges de masse, dans des formulations de peinture, de plastique, de ciment, de céramique, dans des formulations pour le traitement des eaux, des formulations détergentes, cosmétiques et dans des boues de forage.

La Demanderesse tient à préciser ici que tout dispersant utilisé dans le traitement des eaux a également une fonction anti-tartre.

Elle précise également que l'utilisation de cesdites dispersions et suspensions aqueuses dans des formulations plastique passe par une étape de séchage de cesdites dispersions et suspensions, étape bien connue de l'homme du métier.

L'invention concerne aussi l'utilisation directe, comme agent dispersant, des homopolymères de l'acide acrylique et/ou des copolymères de l'acide acrylique avec d'autres monomères hydrosolubles selon l'invention, dans les formulations papetières, et notamment dans les sauces de couchage et les charges de masse, dans des formulations de peinture, de ciment, de céramique, dans des formulations pour le traitement des eaux, dans des formulations détergentes, cosmétiques, et dans des boues de forage.

L'invention concerne aussi l'utilisation directe, comme agent antitartre, des homopolymères de l'acide acrylique et/ou des copolymères de l'acide acrylique avec d'autres monomères hydrosolubles selon l'invention, dans des formulations pour le traitement des eaux.

L'invention concerne aussi les formulations papetières, et notamment les sauces de couchage et les charges de masse, les formulations de peinture, de plastique, de ciment, de céramique, les formulations pour le traitement des eaux, les formulations détergentes, cosmétiques et les boues de forage, obtenues par utilisation dans lesdites formulations des dispersions et suspensions aqueuses de matières minérales selon l'invention.

L'invention concerne aussi les formulations pour le traitement des eaux, obtenues par utilisation directe des polymères selon l'invention comme agent antitartre.

L'invention concerne enfin les formulations papetières, et notamment les sauces de couchage et les charges de masse, les formulations de peinture, de ciment, de céramique, les formulations pour le traitement des eaux, les formulations détergentes, cosmétiques, et les boues de forage, obtenues par utilisation directe comme agent dispersant dans lesdites formulations des polymères selon l'invention.

Les homopolymères de l'acide acrylique, ainsi que les copolymères de l'acide acrylique avec des monomères hydrosolubles sont aujourd'hui bien connus comme étant des produits aux applications multiples, notamment dans le domaine des suspensions et des dispersions aqueuses de matières minérales comme agents de dispersion ou comme agents d'aide au broyage, mais aussi comme agent dispersant dans le domaine plus générale des formulations aqueuses telles que notamment celles employées dans le domaine papetier pour la fabrication des sauces de couchage ou de la charge de masse, ou dans le domaine des peintures aqueuses.

Obtenir de tels homopolymères et copolymères avec un taux de conversion élevé (notamment supérieurs à 90 %) c'est-à-dire un rendement de réaction optimum, un faible indice de polymolécularité (notamment inférieur à 2,2), une masse moléculaire contrôlée c'est-à-dire la possibilité pour le fabricant d'obtenir la masse moléculaire de son choix, est donc un enjeu de très haute importance pour l'homme du métier.

A cet effet, il est bien connu d'utiliser des procédés de polymérisation radicalaire contrôlée (CRP : Controlled Radical Polymerization), tout en visant les propriétés requises pour les homopolymères et les copolymères ainsi obtenus.

Parmi elles, les premières ont été l'ATRP (Atom Transfer Radical Polymerization) et la NMP (Nitroxide Mediated Polymerization). On s'est néanmoins rendu compte qu'elles n'étaient pas complètement satisfaisantes. Avec l'ATRP, il a été démontré dans le document « Atom-transfer radical polymerization and the synthesis of polymeric materials » (Advanced Materials (1998), 10 (12), 901-915), que la polymérisation de l'acide acrylique était difficile. En effet, l'acide acrylique réagit rapidement avec le catalyseur, donnant naissance à des composés qui ne permettent pas de contrôler efficacement l'indice de polymolécularité du produit final (voir page 910). Toutefois, le document FR 2 797 633 propose une méthode de polymérisation de monomères acryliques et méthacryliques par cette voie. Cependant, ces documents font apparaître de nouveaux problèmes à l'homme du métier. En effet, le procédé ATRP met en oeuvre des catalyseurs à base de sels de cuivre qui engendrent des pollutions non souhaitables ; on va aussi retrouver le cuivre dans les produits synthétisés, ce que ne souhaite pas nécessairement l'homme du métier.

Dans le cas de la NMP, d'autres travaux ont montré que le groupement acide était impliqué dans des réactions annexes avec les nitroxides, conduisant à des sous produits de réaction, comme il est décrit dans le document « Rate Enhancement of Living Free-Radical Polymerizations by an Organic Acid Salt » (Macromolecules (1995), 28(24), 8453-8455). En outre, dans le cas de la synthèse de l'acide polyacrylique à partir de cette technique, il a été montré que le taux de conversion ne suivait pas le degré de polymérisation (« Direct synthesis of controlled poly(styrene-co-acrylic acid)s of various compositions by nitroxide-mediated random copolymerization », Macromol. Chem. Phys. (2003), 204, 2055-2063) : il est donc malaisé d'utiliser cette méthode pour contrôler précisément le degré de polymérisation de l'acide acrylique.

L'homme du métier s'est alors orienté vers une autre technique de polymérisation radicalaire contrôlée : la RAFT (Reversible Addition Fragmentation Transfer).

Il a d'abord développé des procédés de type RAFT faisant intervenir des agents de transfert fabriqués dans des solvants et des polymères synthétisés eux aussi en présence de solvants.

On connaît ainsi le document EP 0 910 587 qui décrit un procédé de fabrication de composés de formule générale Z(C=S)SR, utilisés comme agent de transfert de chaîne dans des procédés de type RAFT, et qui enseigne qu'il faut choisir un solvant approprié en fonction des monomères qu'on souhaite polymériser, comme le montre notamment l'exemple 22, en utilisant le diméthylformamide pour la synthèse de l'acide polyacrylique. De plus, la Demanderesse constate que le taux de conversion est particulièrement faible car égal à 17,5 %.

On a continué à étudier cette voie et l'homme du métier dispose aussi aujourd'hui du document « Controlled polymerization of acrylic acid under 60Co irradiation in the presence of dibenzyl trithiocarbonate » (Journal of Polymer Science : Part A : Polymer Chemistry (2001), 39, 3934-3939). Il décrit la polymérisation de l'acide acrylique par la technique RAFT en présence de dibenzyl trithiocarbonate, qui est excité par irradiation au ⁶⁰Co, puis dilué dans du diméthylformamide. En outre, le dibenzyl trithiocarbonate est préparé en présence de solvant qui doit être évaporé en fin de réaction.

Ce type de procédé présente le double inconvénient de faire intervenir des solvants organiques, tant au niveau de la fabrication de l'agent de transfert, qu'au stade de la polymérisation. Outre le fait qu'ils puissent être dangereux pour l'utilisateur, nuisibles pour l'environnement, ces solvants doivent être éliminés en fin de réaction pour purifier le produit par évaporation, distillation, ou tout autre moyen bien connu par l'homme du métier : le procédé n'en est que plus long et plus onéreux. Il existe donc un besoin indispensable de trouver une solution au problème de la mise au point de procédés ne faisant plus intervenir de solvants organiques, aussi bien lors de la fabrication de l'agent de transfert que lors de la synthèse par voie RAFT des polymères. L'homme du métier examine donc aujourd'hui les documents dont il dispose pour atteindre cet objectif : ceux-ci peuvent être classés en différentes catégories.

L'homme du métier connaît notamment des procédés de fabrication de copolymères de l'acide acrylique avec d'autres monomères hydrosolubles qui mettent en jeu la technologie RAFT et font appel à des agents de transfert particuliers : des xanthates. Cette méthode est désignée dans la littérature par le terme MADIX (Macromolecular Design via Interchange of Xanthates).

Ainsi, le document « Direct synthesis of double hydrophilic statistical di- and triblock copolymers comprised of acrylamide and acrylic acid units via the MADIX process » (Macromolecules Rapid Communications (2001), 22, 18, pages 1497-1503) enseigne la synthèse de différents copolymères de l'acide acrylique et de l'acrylamide par cette voie, mettant en oeuvre des xanthates particuliers de formule générale RS(C=S)OR'.

Dans cette publication, la synthèse de ces xanthates est réalisée en présence de pyridine, d'éthylène glycol et de dichlorométhane. En outre, il apparaît que les divers copolymères sont fabriqués dans un milieu essentiellement aqueux, mais qui doit nécessairement contenir de l'alcool isopropylique pour dissoudre les xanthates (voir page 1498).

De même, le document WO 98/58974 décrit un procédé de type MADIX pour la synthèse de polymères blocs, à partir de monomères éthyléniquement insaturés, d'un initiateur de polymérisation radicalaire, et de xanthates. Les exemples 1.1 à 1.12 démontrent que les xanthates sont toujours fabriqués en présence de solvants organiques. On parvient alors à polymériser l'acide acrylique dans un milieu qui peut contenir de l'eau, mais obligatoirement un autre solvant tel que l'acétone (exemples 2.25 à 2.28).

On connaît également le document WO 02/14535 qui décrit la synthèse de copolymères blocs de l'acide acrylique et de l'acrylamide par la technique MADIX dans un milieu réactionnel contenant de l'eau et un solvant tel que l'alcool isopropylique. Le choix du solvant, tel qu'indiqué page 22, permet de réguler certaines propriétés du polymère comme sa masse moléculaire. Conformément aux techniques MADIX, les agents de transfert sont des xanthates non hydrosolubles.

Au regard du problème posé à l'homme du métier, ces procédés ne sont donc pas satisfaisants, car si on peut utiliser l'eau dans le milieu de polymérisation, d'autres solvants organiques y sont encore indispensables. De plus, la synthèse même des xanthates fait intervenir des solvants autres que l'eau.

L'homme du métier se tourne alors vers un autre groupe de procédés de type RAFT, où la polymérisation de l'acide acrylique est réalisée dans un milieu exclusivement aqueux.

Ainsi, le document FR 2 821 620 décrit un procédé de polymérisation du type RAFT de l'acide acrylique et de ses sels, dans un système aqueux ou hydro alcoolique, conduisant à des polymères de faible polymolécularité en utilisant des composés particuliers du type RX(C=S)R' comme agents de transfert. Il apparaît cependant à la lecture des exemples que ces agents sont fabriqués en présence de solvant qui est éliminé par filtration et/ou évaporation (exemple 1 essais 1 à 8).

De même, « Functional polymers from novel carboxy-terminated trithiocarbonates as highly efficient RAFT agents » (Polymer Preprints (2002), 43(2), 122-123) décrit un procédé de synthèse du S,S' (α,α` acide diméthylacétique) trithiocarbonate par réaction de CS₂ avec des ions hydroxydes, suivie par une alkylation en présence de chloroforme et d'acétone. Ce produit est utilisé comme agent de transfert pour polymériser des acrylates d'alkyle, l'acide acrylique et le styrène, par une technique RAFT, en présence de solvants tels que l'alcool butylique, l'acétone, un solvant aromatique et l'eau dans le cas précis où on souhaite polymériser l'acide acrylique.

L'homme du métier connaît encore le document WO 03/66685. On y présente la polymérisation par voie RAFT avec un rendement élevé, un faible indice de polymolécularité, et le contrôle des structures obtenues, de polymères et copolymères dans un solvant. L'eau peut être utilisée comme solvant et l'acide acrylique est revendiqué dans la liste des monomères polymérisables. Néanmoins, la synthèse de l'agent de transfert est complexe. Par ailleurs, elle fait intervenir des solvants autres que l'eau et des températures parfois élevées (supérieures à 100 °C). A titre d'illustration, l'exemple 11 décrit la synthèse de naphtyl dithiocarbonylthio, qui fait intervenir (parmi d'autres étapes) une étape de chauffage à 145 °C pendant 4 heures, une étape de dissolution dans l'éthanol à 70 °C, et une étape de purification dans l'acétone et l'hexane.

L'homme du métier connaît enfin le document US 6 596 899 qui décrit des composés trithiocarbonates particuliers (le S,S' bis (α,α' disubstitué α" acide acétique) et ses dérivés), permettant de polymériser par voie RAFT des monomères tels que l'acide acrylique. La polymérisation s'effectue en présence éventuelle de solvants comme des alcanes en C₆-C₁₂, le toluène, le chlorobenzène, l'acétone, la DMF, ou l'eau. Ces solvants sont choisis de manière à ne pas se comporter eux-mêmes comme agents de transfert. En revanche, la synthèse des composés trithiocarbonates est réalisée en présence de solvants organiques dans lesquels les composés réagissant sont solubles.

Ces documents, s'ils révèlent la possibilité de réaliser des polymérisations de l'acide acrylique par voie RAFT en milieux aqueux ne constituent pas des solutions acceptables au problème posé à l'homme du métier. En effet, les agents de transfert utilisés doivent être systématiquement fabriqués en présence de solvants organiques.

L'homme du métier connaît enfin le document FR 2 842 814. Celui-ci décrit un procédé de polymérisation de type RAFT de l'acide acrylique en solution aqueuse, avec un agent de transfert qui est un sel xanthique α-substitué β-carboxylé synthétisé in-situ dans la solution aqueuse. C'est à sa connaissance le seul document où la polymérisation de l'acide acrylique et la fabrication des agents de transfert ne font pas intervenir de solvants organiques. Mais cette solution demeure problématique. En effet, les sels xanthiques dégagent une odeur nauséabonde, qu'on retrouve au niveau du polymère synthétisé. Cette odeur constitue un problème, autant pour le personnel qui est amené à fabriquer lesdits polymères, que pour l'utilisateur final.

Il existe donc un besoin évident pour l'homme du métier de fabriquer par voie RAFT, sans utiliser de solvants organiques, sans mettre en jeu des sels xanthiques odorants, des homopolymères de l'acide acrylique et des copolymères de l'acide acrylique avec d'autres monomères hydrosolubles.

Cette nécessité est renforcée par de récents travaux qui démontrent, pour la première fois, que l'acide polyacrylique synthétisé par la technique RAFT s'avère être extrêmement efficace comme agent de dispersion de matières minérales dans l'eau : « Synthesis and characterization of poly(acrylic acid) produced by RAFT polymerization : application as a very efficient dispersant of CaCO3, kaolin, and TiO2 » (Macromolecules 2003, 36, 3066-3077). En effet, cette efficacité au niveau de la dispersion était bien connue pour l'acide polyacrylique en tant que tel, mais n'avait jamais été démontrée dans le cas d'un homopolymère obtenu par la technique RAFT.

Cependant le seul enseignement global qu'indique ce document est que la diminution de l'indice de polymolécularité de l'agent dispersant est un facteur important dans la mise en dispersion de charges minérales telles que le dioxyde de titane, le carbonate de calcium ou le kaolin.

En effet, ce document fait état d'une part de phénomènes d'adsorption compliqués pour le carbonate de calcium et le kaolin (page 3076 lignes 5-7) et d'autre part de conditions de synthèse non satisfaisantes pour l'homme du métier : la polymérisation de l'acide acrylique est réalisée en présence de méthanol, d'éthanol, de propanol-2 ou de dioxanne, avec tous les problèmes de compétition potentiellement existant entre le solvant et l'agent de transfert.

A ce stade, la Demanderesse a poursuivi ses recherches, et a trouvé de manière surprenante des nouveaux homopolymères de l'acide acrylique et des nouveaux copolymères de l'acide acrylique avec d'autres monomères hydrosolubles fabriqués par voie RAFT, sans utiliser de solvants organiques, sans mettre en jeu des sels xanthiques odorants, et disposant de groupes carboxyliques en bout de chaîne répondant à la formule (I), en mettant au point un procédé de polymérisation radicalaire contrôlée de type RAFT, dans l'eau, qui met en oeuvre des agents de transfert non odorants et fabriqués dans l'eau. Ces nouveaux polymères possèdent un taux de conversion supérieur à 90 %, un indice de polymolécularité inférieur à 2,2 et contiennent en bout de chaîne un motif qui répond à la formule (I).

A ce stade, la Demanderesse tient à indiquer les techniques de mesure de ces différentes grandeurs, qui seront les mêmes dans toute la suite de la présente demande. Le taux de conversion est mesuré par chromatographie liquide à haute performance (HPLC). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide acrylique résiduel. Cette méthode fait partie de l'état de l'art, et est décrite dans de nombreux ouvrages de référence, comme, par exemple, dans le manuel « Chimie Organique Expérimentale », par M. Chavanne, A. Julien, G. J. Beaudoin, E. Flamand, deuxième Edition, Editions Modulo, chapitre 18, pages 271-325.

La masse moléculaire moyenne en poids ainsi que l'indice de polymolécularité sont déterminés en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K.

La Demanderesse précise à ce niveau que l'étalonnage polyacrylate est choisi car il lui paraît le mieux adapté pour des polymères acryliques et que les résultats obtenus dépendent du type d'étalonnage utilisé, particulièrement pour l'indice de polymolécularité.

De plus, les homopolymères de l'acide acrylique et/ou les copolymères de l'acide acrylique avec des monomères hydrosolubles selon l'invention possèdent un indice de polymolécularité inférieur à 2,2 et s'avèrent être enfin des agents d'aide au broyage et/ou d'aide au cobroyage ainsi que des agents de dispersion très efficaces pour les suspensions aqueuses de matières minérales.

L'objet de l'invention concerne les homopolymères de l'acide acrylique et/ou les copolymères de l'acide acrylique avec d'autres monomères hydrosolubles, obtenus par un procédé de polymérisation radicalaire contrôlée de type RAFT, dans l'eau, utilisant comme agent de transfert des composés de formule (I') : 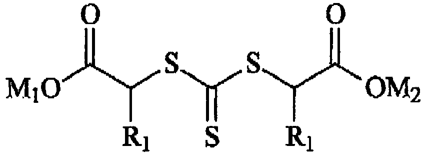
- où R₁ désigne un radical alkyle ayant de 1 à 10 atomes de carbone, un radical aromatique éventuellement substitué par une chaîne alkyle ayant de 1 à 4 atomes de carbone ;
- et où M₁ et M₂ désignent l'atome d'hydrogène, un sel d'amine, l'ammonium ou un cation alcalin, et sont identiques ou différents.

Ces homopolymères de l'acide acrylique et/ou ces copolymères de l'acide acrylique avec d'autres monomères hydrosolubles ont un indice de polymolécularité inférieur à 2,2 tout en contenant en bout de chaîne un motif qui répond à la formule (I) : 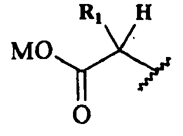
- où R₁ désigne un radical alkyle ayant de 1 à 10 atomes de carbone, un radical aromatique éventuellement substitué par une chaîne alkyle ayant de 1 à 4 atomes de carbone ;
- et où M désigne l'atome d'hydrogène, un sel d'amine, l'ammonium ou un cation alcalin, et sont identiques ou différents.

Un autre objet de l'invention est l'utilisation desdits homopolymères de l'acide acrylique et/ou desdits copolymères de l'acide acrylique avec d'autres monomères hydrosolubles, comme agents d'aide au broyage et/ou d'aide au cobroyage de matières minérales dans l'eau.

Un autre objet de l'invention est l'utilisation desdits homopolymères de l'acide acrylique et/ou desdits copolymères de l'acide acrylique avec d'autres monomères hydrosolubles, comme agents de dispersion de matières minérales dans l'eau. La Demanderesse précise ici que tous les dispersants connus de l'homme du métier ne sont pas nécessairement des agents d'aide au broyage.

Un autre objet de l'invention concerne lesdites dispersions et suspensions aqueuses de matières minérales.

Un autre objet de l'invention est l'utilisation desdites dispersions et suspensions de matières minérales dans les formulations papetières, et notamment dans les sauces de couchage et les charges de masse, dans des formulations de peinture, de plastique, de ciment, de céramique, dans des formulations pour le traitement des eaux, dans des formulations détergentes, cosmétiques et dans des boues de forage.

Un autre objet de l'invention est l'utilisation directe, comme agent dispersant, des homopolymères de l'acide acrylique et/ou des copolymères de l'acide acrylique avec d'autres monomères hydrosolubles selon l'invention, dans les formulations papetières, et notamment dans les sauces de couchage et les charges de masse, dans des formulations de peinture, de ciment, dans des formulations pour le traitement des eaux, dans des formulations détergentes, cosmétiques, céramiques et dans des boues de forage.

Un autre objet de l'invention concerne l'utilisation directe, comme agent antitartre, des homopolymères de l'acide acrylique et/ou des copolymères de l'acide acrylique avec d'autres monomères hydrosolubles selon l'invention, dans des formulations pour le traitement des eaux.

Un autre objet de l'invention concerne les formulations papetières, et notamment les sauces de couchage et les charges de masse, les formulations de peinture, de plastique, de ciment, de céramique, les formulations pour le traitement des eaux, les formulations détergentes, cosmétiques, et les boues de forage, obtenues par utilisation dans lesdites formulations des dispersions et suspensions aqueuses de matières minérales selon l'invention.

Un autre objet de l'invention concerne les formulations pour le traitement des eaux, obtenues par utilisation directe des polymères selon l'invention comme agent antitartre.

Un dernier objet de l'invention concerne les formulations papetières, et notamment les sauces de couchage et les charges de masse, les formulations de peinture, de ciment, de céramique, les formulations pour le traitement des eaux, les formulations détergentes, cosmétiques et les boues de forage, obtenues par utilisation directe dans lesdites formulations des polymères selon l'invention comme agent dispersant.

Ainsi, l'objet de l'invention concerne les homopolymères de l'acide acrylique et/ou les copolymères de l'acide acrylique obtenus par un procédé de polymérisation radicalaire contrôlée de type RAFT, dans l'eau, et **caractérisés en ce qu**'ils ont un indice de polymolécularité inférieur à 2,2 et contiennent en bout de chaîne un motif qui répond à la formule (I) : 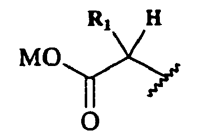
- où R₁ désigne un radical alkyle ayant de 1 à 10 atomes de carbone, un radical aromatique éventuellement substitué par une chaîne alkyle ayant de 1 à 4 atomes de carbone ;
- et où M désigne l'atome d'hydrogène, un sel d'amine, l'ammonium ou un cation alcalin.

Les amines sont choisies parmi les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine.

Les cations alcalins sont choisis parmi le sodium, le potassium, le lithium.

De manière préférentielle, R₁ est un radical alkyle ayant de 2 à 6 atomes de carbone, et M désigne l'atome d'hydrogène, le sodium ou le potassium.

De manière plus préférentielle, R₁ est un radical alkyle ayant de 2 à 6 atomes de carbone, M désigne l'atome d'hydrogène ou le sodium.

De manière encore plus préférentielle, R₁ est un radical alkyle ayant de 2 à 4 atomes de carbone, et M désigne l'atome d'hydrogène ou le sodium.

De manière encore plus préférentielle, R₁ est le radical alkyle ayant 4 atomes de carbone, et M désigne l'atome d'hydrogène ou le sodium.

De manière encore plus préférentielle, R₁ est le radical alkyle ayant 4 atomes de carbone, et M désigne le sodium.

Les copolymères de l'acide acrylique avec d'autres monomères hydrosolubles selon l'invention sont aussi **caractérisés en ce que** les monomères hydrosolubles sont choisis parmi l'acide méthacrylique, l'acide itaconique, maléique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acrylate de méthoxy polyéthylène glycol, le méthacrylate de méthoxy polyéthylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium, ainsi que leurs mélanges.

Les homopolymères de l'acide acrylique et/ou les copolymères de l'acide acrylique avec d'autres monomères hydrosolubles obtenus selon l'invention, sont aussi **caractérisés en ce qu**'ils présentent une masse moléculaire moyenne en poids (M_{w}) comprise entre 1000 g/mole et 100 000 g/mole, préférentiellement entre 1000 g/mole et 50 000 g/mol, très préférentiellement entre 1000 g/mole et 30 000 g/mole, de manière extrêmement préférentielle entre 1000 g/mole et 20 000 g/mole, selon la méthode précédemment décrite.

Les homopolymères de l'acide acrylique et/ou les copolymères de l'acide acrylique avec d'autres monomères hydrosolubles obtenus selon l'invention, sont aussi **caractérisés en ce qu**'ils présentent un taux de conversion supérieur à 90 %, préférentiellement supérieur à 95 %, et très préférentiellement supérieur à 99 %.

Ces homopolymères et/ou ces copolymères selon l'invention sont soit sous leur forme acide, c'est-à-dire non neutralisée, soit partiellement ou totalement neutralisés par un ou plusieurs agents de neutralisation monovalents, divalents, trivalents ou de valence plus élevée ou leurs mélanges.

Les agents de neutralisation monovalents sont choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que par exemple les éthanolamines, la mono et diéthylamine ou encore la cyclohexylamine.

Les agents de neutralisation divalents, trivalents ou de valence plus élevée sont choisis dans le groupe constitué par les composés contenant des cations divalents alcalino-terreux, en particulier le magnésium et le calcium, ou encore le zinc, de même que parmi les cations trivalents, dont en particulier l'aluminium, ou encore par certains composés contenant des cations de valence plus élevée.

Un autre objet de l'invention est l'utilisation comme agents d'aide au broyage et/ou d'aide au cobroyage de matières minérales dans l'eau, des homopolymères de l'acide acrylique et/ou des copolymères de l'acide acrylique, selon l'invention.

La Demanderesse précise que l'opération de broyage de la substance minérale à affiner consiste à broyer la substance minérale avec un corps broyant en particules très fines dans un milieu aqueux contenant l'agent d'aide au broyage. De manière différente, l'opération de dispersion consiste à mettre en suspension dans l'eau la matière minérale, en présence d'agent dispersant, pour obtenir ainsi une suspension stable dans le temps et ce, sans réduction de taille des particules.

Par ailleurs, le Demanderesse précise aussi que l'opération de cobroyage consiste à broyer un mélange d'au moins 2 charges minérales.

Ainsi, à la suspension aqueuse de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés 30 % à 70 % en poids d'oxyde de zirconium, 0,1 % à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

Le temps nécessaire pour aboutir à la finesse souhaitée de la substance minérale après broyage sera défini par l'homme du métier selon la nature et la quantité des substances minérales à broyer, et selon le mode d'agitation utilisé et la température du milieu pendant l'opération de broyage.

L'utilisation comme agents d'aide au broyage et/ou d'aide au cobroyage de matières minérales dans l'eau, des polymères selon l'invention est également caractérisée en ce que les matières minérales sont choisies parmi le carbonate de calcium naturel ou synthétique, les dolomies, le kaolin, le talc, le gypse, l'oxyde de titane, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane. Ces matières minérales sont préférentiellement un carbonate de calcium choisi parmi le marbre, la calcite, la craie ou leurs mélanges.

L'utilisation comme agents d'aide au broyage et/ou d'aide au cobroyage de matières minérales dans l'eau des polymères selon l'invention est également caractérisée en ce qu'on met en oeuvre de 0,05 % à 5 % en poids sec des polymères selon l'invention par rapport au poids sec de matières minérales, et encore plus particulièrement de 0,1 % à 3 % en poids sec des polymères selon l'invention par rapport au poids sec de matières minérales.

Un autre objet de l'invention est l'utilisation comme agents dispersants de matières minérales dans l'eau, des homopolymères de l'acide acrylique et/ou des copolymères de l'acide acrylique avec des monomères hydrosolubles, selon l'invention.

L'utilisation comme agents dispersants de matières minérales dans l'eau, des polymères selon l'invention est également caractérisée en ce que les matières minérales sont choisies parmi le carbonate de calcium naturel ou synthétique, les dolomies, le kaolin, le talc, le gypse, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.

Ces matières minérales sont préférentiellement un carbonate de calcium choisi parmi le marbre, la calcite, la craie ou leurs mélanges.

L'utilisation comme agents dispersants de matières minérales dans l'eau des polymères selon l'invention est également caractérisée en ce qu'on met en oeuvre de 0,05 % à 5 % en poids sec des polymères selon l'invention par rapport au poids sec de matières minérales, et encore plus particulièrement de 0,1 % à 3 % en poids sec des polymères selon l'invention par rapport au poids sec de matières minérales.

Un autre objet de l'invention concerne les suspensions et les dispersions aqueuses de matières minérales obtenus par utilisation des polymères selon l'invention.

Les suspensions aqueuses de matières minérales selon l'invention sont caractérisées en ce que les matières minérales sont choisies parmi le carbonate de calcium naturel ou synthétique, les dolomies, le kaolin, le talc, le gypse, l'oxyde de titane, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane. Ces matières minérales sont préférentiellement un carbonate de calcium choisi parmi le marbre, la calcite, la craie ou leurs mélanges.

Les dispersions aqueuses de matières minérales selon l'invention sont caractérisées en ce que les matières minérales sont choisies parmi le carbonate de calcium naturel ou synthétique, les dolomies, le kaolin, le talc, le gypse, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane. Ces matières minérales sont préférentiellement un carbonate de calcium choisi parmi le marbre, la calcite, la craie ou leurs mélanges.

Les suspensions et les dispersions aqueuses de matières minérales selon l'invention sont caractérisées en ce que qu'elles contiennent de 0,05 % à 5 % en poids sec des polymères selon l'invention par rapport au poids sec de matières minérales, et encore plus particulièrement de 0,1 % à 3 % en poids sec des polymères selon l'invention par rapport au poids sec de matières minérales.

Un autre objet de l'invention est l'utilisation des dispersions et des suspensions aqueuses de matières minérales selon l'invention, dans les formulations papetières, et notamment dans les sauces de couchage et les charges de masse, dans des formulations de peinture, de plastique, de céramique, de ciment, dans des formulations pour le traitement des eaux, dans des formulations détergentes, cosmétiques et dans des boues de forage.

Un autre objet de l'invention est l'utilisation directe comme agents dispersants, dans les formulations papetières, et notamment dans les sauces de couchage et les charges de masse, dans des formulations de peinture, de céramique, de ciment, dans des formulations pour le traitement des eaux, dans des formulations détergentes, cosmétiques et dans des boues de forage, des polymères obtenus selon l'invention.

Cette utilisation directe dans les formulations papetières, et notamment dans les sauces de couchage et les charges de masse, dans des formulations de peinture, de plastique, de ciment, dans des formulations pour le traitement des eaux, dans des formulations détergentes, cosmétiques et dans des boues de forage, des polymères selon l'invention est également caractérisée en ce qu'on met en oeuvre de 0,05 % à 3 % en poids sec des polymères selon l'invention par rapport au poids sec de matières minérales, et encore plus particulièrement de 0,1 % à 3 % en poids sec des polymères selon l'invention par rapport au poids sec de matières minérales.

Un autre objet de l'invention concerne l'utilisation directe, comme agent antitartre, des homopolymères de l'acide acrylique et/ou des copolymères de l'acide acrylique avec d'autres monomères hydrosolubles selon l'invention, dans des formulations pour le traitement des eaux.

Un autre objet de l'invention concerne les formulations pour le traitement des eaux, obtenues par utilisation directe des polymères selon l'invention comme agent antitartre.

Un dernier objet de l'invention concerne enfin les formulations papetières, et notamment les sauces de couchage et les charges de masse, les formulations de peinture, de plastique, de céramique, de ciment, les formulations pour le traitement des eaux, les formulations détergentes, cosmétiques et les boues de forage, obtenues selon l'invention.

La portée et l'intérêt de l'invention seront mieux perçus grâce aux exemples suivants qui ne sauraient être limitatifs.

### EXEMPLE 1

Cet exemple a pour objet de présenter la synthèse de composés servant à la fabrication des homopolymères et copolymères selon l'invention.

### Essai n°1

Préparation du composé A de formule : 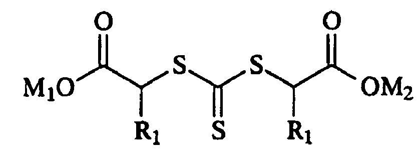
- où R₁ désigne le radical alkyle ayant 4 atomes de carbone ;
- et M₁ et M₂ désignent l'atome de sodium Na.

Dans un bécher sous agitation magnétique, on pèse :
- 30 grammes d'eau ;
- 19,5 grammes d'acide 2 bromohexanoïque.

On neutralise le mélange avec une solution de soude à 50 % jusqu'à obtenir un pH égal à 6,5. La température augmente jusqu'à 52 °C. On obtient alors une solution homogène qu'on refroidit à 43 °C.

On coule ensuite goutte à goutte et en 20 minutes 30,8 grammes d'une solution aqueuse de trithiocarbonate disodique à 25 %.

On laisse réagir pendant 2 heures sous agitation. La réaction de S alkylation est légèrement exothermique et la température augmente jusqu'à 47 °C, alors que le pH s'établit à 10.

On obtient une solution jaune limpide contenant le composé A.

### EXEMPLE 2

Cet exemple a pour objet d'illustrer l'obtention d'homopolymères de l'acide acrylique selon l'invention, par l'utilisation de composés soufrés dans un procédé de polymérisation radicalaire contrôlée de type RAFT, dans l'eau.

### Essai n°2

Dans un réacteur de 1 litre muni d'une agitation mécanique et d'un chauffage de type bain d'huile, on introduit :
- 150 grammes d'eau ;
- 50 grammes d'acide acrylique ;
- 17,1 grammes d'une solution à 17,1% contenant le composé de formule (I') : 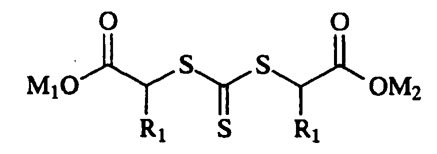
   - où R₁ désigne le radical alkyle ayant 1 atome de carbone ;
   - et M₁ et M₂ désignent l'atome de sodium Na.
- 0,4 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C. On maintient ensuite la température à 95 °C pendant 2 heures. On obtient alors une solution limpide, légèrement orangée, qu'on refroidit à température ambiante.

Cette solution est neutralisée avec de la soude jusqu'à pH = 8,5 ; on obtient alors une solution qui contient un homopolymère de l'acide acrylique neutralisé par le sodium.

### Essai n°3

Dans un réacteur de 1 litre muni d'une agitation mécanique et d'un chauffage de type bain d'huile, on introduit :
- 300 grammes d'eau ;
- 100 grammes d'acide acrylique ;
- 34 grammes d'une solution contenant le composé de formule (I') : 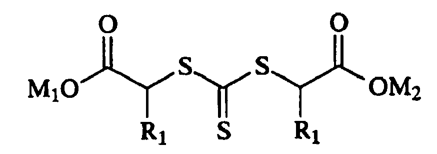
   - où R₁ désigne le radical alkyle ayant 1 atome de carbone ;
   - et M₁ et M₂ désignent l'atome de sodium Na.
- 0,8 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C. On maintient ensuite la température à 95 °C pendant 2 heures.

On obtient alors une solution limpide, légèrement orangée, qu'on refroidit à température ambiante.

Cette solution est neutralisée avec un mélange molaire de 30 % de chaux et de 70 % de soude jusqu'à pH = 8,5 ; on obtient alors une solution qui contient un homopolymère de l'acide acrylique neutralisé à 30 % par le calcium et à 70 % par le sodium.

### Essai n°4

Dans un réacteur de 1 litre muni d'une agitation mécanique et d'un chauffage de type bain d'huile, on introduit :
- 150 grammes d'eau ;
- 50 grammes d'acide acrylique ;
- 17,07 grammes de la solution de l'essai n°1 contenant le composé A ;
- 0,4 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C.

On maintient ensuite la température à 95 °C pendant 2 heures. On obtient alors une solution limpide, légèrement orangée, qu'on refroidit à température ambiante.

Cette solution est neutralisée avec un mélange molaire de 30 % de chaux et de 70 % de soude jusqu'à pH = 8,5 ; on obtient alors une solution qui contient un homopolymère de l'acide acrylique neutralisé à 30 % par le calcium et à 70 % par le sodium.

### Essai n°5

Dans un réacteur de 1 litre muni d'une agitation mécanique et d'un chauffage de type bain d'huile, on introduit :
- 300 grammes d'eau ;
- 100 grammes d'acide acrylique ;
- 23,9 grammes de la solution de l'essai n°1 contenant le composé A ;
- 0,56 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C. On maintient ensuite la température à 95 °C pendant 2 heures. On obtient alors une solution limpide, légèrement orangée, qu'on refroidit à température ambiante.

Cette solution est neutralisée avec de la soude jusqu'à pH = 8,5 ; on obtient alors une solution qui contient un homopolymère de l'acide acrylique neutralisé par le sodium.

### Essai n°6

Dans un réacteur de 1 litre muni d'une agitation mécanique et d'un chauffage de type bain d'huile, on introduit :
- 300 grammes d'eau ;
- 100 grammes d'acide acrylique ;
- 16,8 grammes de la solution de l'essai n°1 ;
- 1,04 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C. On maintient ensuite la température à 95 °C pendant 2 heures. On obtient alors une solution limpide, légèrement orangée, qu'on refroidit à température ambiante.

Cette solution est neutralisée avec de la soude jusqu'à pH = 8,5 ; on obtient alors une solution qui contient un homopolymère de l'acide acrylique neutralisé par le sodium.

### Essai n°7

Dans un réacteur de 1 litre muni d'une agitation mécanique et d'un chauffage de type bain d'huile, on introduit :
- 300 grammes d'eau ;
- 100 grammes d'acide acrylique ;
- 18,6 grammes de la solution de l'essai n°1 contenant le composé A ;
- 0,44 grammes d'un initiateur de polymérisation 4,4' azobis (4- cyano pentanoïque) commercialisé par la société Aldrich sous le nom V501.

Sous agitation, on chauffe le mélange jusqu'à une température égale à 100 °C. On maintient ensuite la température à 95 °C pendant 2 heures.

On obtient alors une solution limpide, légèrement orangée, qu'on refroidit à température ambiante.

Cette solution est neutralisée avec de la soude jusqu'à pH = 8,5 ; on obtient alors une solution qui contient un homopolymère de l'acide acrylique neutralisé par le sodium.

Pour l'ensemble des essais n° 2 à 7, on détermine le taux de conversion du polymère par HPLC, sa masse moléculaire en poids (M_{w}) et son indice de polymolécularité par GPC, ainsi que la présence du motif de formule (I) en bout de chaîne des polymères grâce aux méthodes qui ont été préalablement exposées et par la mise en oeuvre pour l'analyse HPLC d'un ensemble HPLC de marque Philips référence PU 4100 doté d'un détecteur UV/visible référence PU 4110, pour l'analyse GPC d'un appareillage GPC de marque Waters constitué d'une pompe Waters 515, d'une ou deux colonnes Ultrahydrogel linéaires 7,8mm x 30 cm (diamètre de pores de 120 à 2000 Å) avec une précolonne de garde et un réfractomètre Waters référencé 410, et enfin pour l'analyse MALDI TOF un appareillage temps de vol dénommé Voyager-DE STR de PerSeptive Biosystems utilisant un laser à azote (337nm) et un voltage d'accélération de 20kV.

Les résultats correspondants sont regroupés dans le tableau 1.

**Tableau 1 : caractéristiques des homopolymères de l'acide acrylique selon l'invention avec :**

| **Essai n°** | **Sys. Neut.** | **M_{w}** | **Iₚ** | **T_{c} (%)** |
|---|---|---|---|---|
| 2 | Na | 6800 | 1,60 | 99,1 |
| 3 | 30 % Ca | 6300 | 1,55 | 99,2 |
| | 70 % Na | | | |
| 4 | 30 % Ca | 6700 | 1,72 | 99,8 |
| | 70 % Na | | | |
| 5 | Na | 8000 | 2,10 | 99,6 |
| 6 | Na | 11800 | 1,95 | 98,9 |
| 7 | Na | 9600 | 2,04 | 99,0 |

| | | | | |
|---|---|---|---|---|
| Sys. Neut. : nature du système de neutralisation M_{w} : masse moléculaire en poids (en g/mole) Iₚ : indice de polymolécularité T_{c} : taux de conversion (en %) | | | | |

Les essais n° 2 à 7 démontrent qu'on a pu obtenir, des homopolymères de l'acide acrylique selon l'invention qui possèdent un indice de polymolécularité inférieur à 2,2 et un taux de conversion supérieur à 98 %, ainsi qu'un motif de formule (I) en bout de chaîne.

### EXEMPLE 3

Cet exemple illustre la mise en oeuvre d'un polymère selon l'invention comme agent d'aide au broyage de matière minérale et plus particulièrement de carbonate de calcium. Cet exemple illustre également l'obtention de suspensions aqueuses de carbonate de calcium selon l'invention.

Il est également à noter que ces suspensions de carbonate de calcium selon l'invention sont affinées, fortement concentrées en matière minérale et facilement manipulables par l'utilisateur final c'est-à-dire facilement utilisables aussi bien pour le couchage du papier que pour la charge de masse du papier.

Pour ce faire, on a préparé une suspension aqueuse à partir de carbonate de calcium provenant du gisement d'Orgon (France), de diamètre médian de l'ordre de 7 micromètres.

La suspension aqueuse a une concentration en matière sèche de 76 % en poids par rapport à la masse totale.

L'agent d'aide au broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill™ à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.
La vitesse circonférentielle du broyeur est de 10 mètres par seconde.
La suspension de carbonate de calcium est recyclée à raison de 18 litres par heure.

La sortie du broyeur Dyno-Mill™ est munie d'un séparateur de mailles 200 microns permettant de séparer la suspension résultant du broyage et le corps broyant.

La température lors de chaque essai de broyage est maintenue à 60°C environ.

A la fin du broyage (Tₒ), on récupère dans un flacon un échantillon de la suspension pigmentaire.

On détermine la granulométrie des suspensions à l'aide d'un granulomètre Sédigraph™ 5100 de la société Micromeritics. On calcule ensuite la demande en dispersant définie comme le % en poids de polymère sec utilisé, par rapport au poids sec de charges minérales et ce, pour obtenir une granulométrie donnée. Pour l'ensemble des essais 8 à 11, cette granulométrie est fixée de telle manière à ce que 80 % des particules aient un diamètre moyen inférieur à 1 µm.

La viscosité Brookfield™ de la suspension est mesurée à l'aide d'un viscosimètre Brookfield™ type RVT, à une température de 25°C et des vitesses de rotation de 10 tours par minute et 100 tours par minute avec le mobile adéquat. La lecture de la viscosité est effectuée après une minute de rotation. On obtient ainsi la viscosité initiale de la suspension à T=0. Après un temps de repos de 8 jours, la viscosité est à nouveau mesurée : c'est la viscosité à T=8 jours avant agitation. La même mesure de viscosité est réalisée après avoir agité la suspension pendant 5 minutes : c'est la viscosité à T=8 jours après agitation.

### Essai n° 8

Cet essai illustre l'art antérieur et met en oeuvre 1,06 % en poids sec, par rapport au poids sec de carbonate de calcium, d'un polyacrylate, obtenu par un procédé classique de polymérisation radicalaire, de poids moléculaire égal à 5600 g/mole, d'indice de polymolécularité égal à 2,4 (tels que déterminés par les méthodes précédemment décrites) et neutralisé par un mélange calcium-sodium dans un rapport molaire égal à 30/70.

### Essai n° 9

Cet essai illustre l'art antérieur et met en oeuvre 1,04 % en poids sec, par rapport au poids sec de carbonate de calcium, d'un polyacrylate, obtenu par un procédé de polymérisation radicalaire de type RAFT, mettant en oeuvre le dibenzyl trithiocarbonate comme agent de transfert, et polymérisé dans l'éthanol selon la méthode décrite dans la demande de brevet française FR 2 821 620. Il s'agit d'un polyacrylate de poids moléculaire égal à 5955 g/mole, d'indice de polymolécularité égal à 1,95 (tels que déterminés par les méthodes précédemment décrites) et neutralisé par un mélange calcium-sodium dans un rapport molaire égal à 30/70.

### Essai n° 10

Cet essai illustre l'art antérieur et met en oeuvre 1,00 % en poids sec, par rapport au poids sec de carbonate de calcium, d'un polyacrylate, obtenu par un procédé de polymérisation radicalaire contrôlée dans l'eau, mettant en oeuvre un xanthate carboxylé de formule :

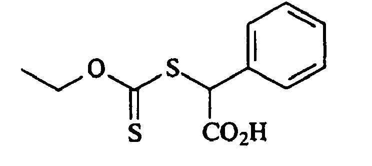

Le polymère fabriqué est un polyacrylate de poids moléculaire égal à 7725 g/mole, d'indice de polymolécularité égal à 2,00 (tels que déterminés par les méthodes précédemment décrites) et neutralisé par un mélange calcium-sodium dans un rapport molaire égal à 30/70.

### Essai n°11

Cet essai illustre l'invention et met en oeuvre le polyacrylate selon l'invention de l'essai n°4.

### Essai n°12

Cet essai illustre l'invention et met en oeuvre le polyacrylate selon l'invention de l'exemple n°3.

Les caractéristiques des polymères utilisés (poids moléculaire, indice de polymolécularité, taux de conversion), la demande en polymère correspondante, ainsi que les différentes viscosités Brookfield™ mesurées, sont consignées dans le tableau 2.

**Tableau 2 : utilisation comme agents d'aide au broyage de polyacrylates de l'art antérieur et de polyacrylates selon l'invention**

| **n° essai** | **Art Ant. / Inv.** | **Polymère** | | | **% en disp.** | **Viscosité Brookfield™ (mPa.s)** | | | | | |
|---|---|---|---|---|---|---|---|---|---|---|---|
| | | | | | | **T=0** | | **8 jours AVAG** | | **8 jours APAG** | |
| | | **Ip** | **Mw** | **Tc** | | **10 t/min** | **100 t/min** | **10 t/min** | **100 t/min** | **10 t/min** | **100 t/min** |
| 8 | Art Ant. | 2,4 | 5600 | > 99 | 1,07 | 2170 | 668 | 9413 | 1705 | 2423 | 794 |
| 9 | Art Ant. | 1,95 | 5955 | 99,5 | 1,04 | 1724 | 498 | 3610 | 935 | 1454 | 464 |
| 10 | Art Ant. | 2,00 | 7725 | 99 | 1,00 | 1693 | 522 | 6439 | 1384 | 1678 | 533 |
| 11 | Inv. | 1,72 | 6700 | 99,8 | 0,96 | 1313 | 376 | 2196 | 648 | 1290 | 395 |
| 12 | Inv. | 1,55 | 6300 | 99,2 | 0,99 | 951 | 308 | 1475 | 521 | 729 | 253 |

| | | | | | | | | | | | |
|---|---|---|---|---|---|---|---|---|---|---|---|
| Iₚ : indice de polymolécularité M_{w} : poids moléculaire (en g/mole) Tₑ : taux de conversion (en %) % en disp. : demande en dispersant (% en poids de polymère sec / poids sec de charges) | | | | | | | | | | | |

Les résultats du tableau 2 démontrent que les polymères selon l'invention ont des indices de polymolécularité bien inférieurs à 2,2 et inférieurs dans tous les cas à ceux des polymères de l'art antérieur.

On démontre ainsi que les polymères selon l'invention sont plus monodisperses que ceux de l'art antérieur.

De plus, la demande en polymère selon l'invention est toujours inférieure à la demande en polymère de l'art antérieur : ceci représente un net avantage pour l'utilisateur final.

Enfin, les suspensions de charges minérales fabriquées avec les polymères selon l'invention sont plus stables dans le temps que celles obtenues à partir des polymères de l'art antérieur : les polymères selon l'invention sont donc plus efficaces que ceux de l'art antérieur.

### EXEMPLE 4

Cet exemple a pour objet d'illustrer la préparation d'homopolymères de l'acide acrylique selon l'invention, et les homopolymères selon l'invention ainsi obtenus.

Pour les essais n°13 à n°21, on commence par introduire, dans un réacteur de 2 litres muni d'une agitation mécanique et d'un chauffage de type bain d'huile, l'eau et une solution aqueuse content l'agent de transfert soufré qui est le composé A obtenu lors de l'essai n°1.

Sous agitation, on chauffe ensuite le pied de cuve à une température égale à 95°C.

En maintenant cette température constante à ± 2°C, on ajoute, pendant 1 heure et au moyen de pompes péristaltiques l'acide acrylique et les catalyseurs (persulfate et métabisulfite de sodium, respectivement Na₂S₂O₈ et Na₂S₂O₅). La température est ensuite maintenue constante à 95°C ± 2°C pendant 2 heures.

La solution obtenue est neutralisée avec de la soude jusqu'à pH = 8,5. On obtient alors une solution limpide, légèrement orangée, qu'on refroidit à température ambiante et qui contient un homopolymère de l'acide acrylique selon l'invention, neutralisé par le sodium.

Le tableau 3 indique la quantité (en grammes) des différents produits utilisés, ainsi que le poids moléculaire M_{w} (en g/mole), l'indice de polymolécularité Iₚ et le taux de conversion T_{c}, mesurés pour les polymères obtenus, lesdits paramètres étant déterminés selon les méthodes précédemment décrites dans la présente demande.

**Tableau 3 : homopolymères de l'acide acrylique selon l'invention**

| **Essai n°** | **Constituants (masses en grammes)** | | | | | **Propriétés des homopolymères selon l'invention** | | |
|---|---|---|---|---|---|---|---|---|
| | **Eau** | **Acide acrylique** | **Agent de transfert *** | **Catalyseurs** | | **M_{w}** | **I_{P}** | **T_{c}** |
| | | | | **Na₂S₂O₈** | **Na₂S₂O₅** | | | |
| 13 | 400 | 400 | 180 | 4,68 | 1,336 | 4640 | 1,83 | > 99 |
| 14 | 400 | 400 | 138,4 | 3,51 | 1,002 | 6550 | 1,80 | > 99 |
| 15 | 400 | 400 | 138,4 | 5,85 | 1,67 | 7075 | 1,87 | > 99 |
| 16 | 400 | 400 | 108 | 4,68 | 1,336 | 8420 | 2,10 | > 99 |
| 17 | 400 | 400 | 90 | 2,34 | 0,668 | 10235 | 1,90 | > 99 |
| 18 | 400 | 400 | 90 | 4,68 | 1,336 | 10940 | 1,80 | > 99 |
| 19 | 400 | 400 | 77,5 | 3,51 | 1,002 | 12600 | 2,08 | > 99 |
| 20 | 400 | 400 | 77,5 | 4,68 | 1,336 | 14940 | 2,18 | > 99 |
| 21 | 400 | 400 | 76,6 | 4,68 | 1,336 | 16120 | 2,18 | > 99 |

| | | | | | | | | |
|---|---|---|---|---|---|---|---|---|
| Iₚ : indice de polymolécularité M_{w} : poids moléculaire (en g/mole) T_{c} : taux de conversion (en %) * la masse d'agent de transfert correspond à la masse d'une solution aqueuse contenant ledit agent de transfert, celui-ci y étant dilué à 22 % en poids. | | | | | | | | |

Le tableau 3 démontre qu'on obtient des homopolymères de l'acide acrylique selon l'invention :
- ayant un indice de polymolécularité inférieur à 2,2 déterminé en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K ;
- ayant un poids moléculaire compris entre 1000 g/mole et 20000 g/mole ;
- et ayant un taux de conversion supérieur à 99 %.

### EXEMPLE 5

Cet exemple a pour objet d'illustrer la préparation d'homopolymères de l'acide acrylique selon l'invention, et les homopolymères selon l'invention ainsi obtenus.

Pour les essais n°22 à n°27, on commence par introduire, dans un réacteur de 2 litres muni d'une agitation mécanique et d'un chauffage de type bain d'huile, l'eau et une solution aqueuse content l'agent de transfert soufré qui est le composé A obtenu lors de l'essai n°1.

Sous agitation, on chauffe ensuite le pied de cuve à une température égale à 95°C.

En maintenant cette température constante à ± 2°C, on ajoute, pendant 1 heure et au moyen de pompes péristaltiques l'acide acrylique et les catalyseurs (4,4' azobis (4-cyano pentanoïque) commercialisé par la société Aldrich sous le nom V501). La température est ensuite maintenue constante à 95°C ± 2°C pendant 2 heures.

La solution obtenue est neutralisée avec de la soude jusqu'à pH = 8,5. On obtient alors une solution limpide, légèrement orangée, qu'on refroidit à température ambiante et qui contient un homopolymère de l'acide acrylique selon l'invention, neutralisé par le sodium.

Le tableau 4 indique la quantité (en grammes) des différents produits utilisés, ainsi que le poids moléculaire M_{w} (en g/mole), l'indice de polymolécularité Iₚ et le taux de conversion T_{c}, mesurés pour les polymères obtenus, lesdits paramètres étant déterminés selon les méthodes précédemment décrites dans la présente demande.

**Tableau 4 : homopolymères de l'acide acrylique selon l'invention**

| **Essai n°** | **Constituants (masses en grammes)** | | | | **Propriétés des homopolymères selon l'invention** | | |
|---|---|---|---|---|---|---|---|
| | **Eau** | **Acide acrylique** | **Agent de transfert *** | **Catalyseur (V501)** | **M_{w}** | **Iₚ** | **T_{c}** |
| 22 | 300 | 100 | 173 | 4 | 1540 | 1,5 | >99 |
| 23 | 300 | 100 | 138,4 | 3,2 | 1730 | 1,53 | >99 |
| 24 | 300 | 100 | 103,8 | 2,4 | 2155 | 1,55 | >99 |
| 25 | 300 | 100 | 69,2 | 1,6 | 2830 | 1,54 | >99 |
| 26 | 300 | 100 | 51,9 | 8,51 | 3730 | 1,59 | >99 |
| 27 | 150 | 50 | 17,3 | 8,01 | 5600 | 1,52 | >99 |

| | | | | | | | |
|---|---|---|---|---|---|---|---|
| Iₚ : indice de polymolécularité M_{w} : poids moléculaire (en g/mole) T_{c} : taux de conversion (en %) V501 : 4,4' azobis (4- cyano pentanoïque) commercialisé par la société Aldrich sous le nom V501 * la masse d'agent de transfert correspond à la masse d'une solution aqueuse contenant ledit agent de transfert, celui-ci y étant dilué à 22 % en poids. | | | | | | | |

Le tableau qu'on obtient des homopolymères de l'acide acrylique selon l'invention :
- ayant un indice de polymolécularité inférieur à 2,2 déterminé en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K ;
- ayant un poids moléculaire compris entre 1000 g/mole et 20000 g/mole, et dans cet exemple particulier compris entre 1000 g/mole et 6000 g/mole ;
- et ayant un taux de conversion supérieur à 99 %.

### EXEMPLE 6

Cet exemple a pour objet d'illustrer la préparation de copolymères de l'acide acrylique avec des monomères hydrosolubles selon l'invention, et les copolymères selon l'invention ainsi obtenus.

Pour les essais n°28 à n°32, on commence par introduire, dans un réacteur de 2 litres muni d'une agitation mécanique et d'un chauffage de type bain d'huile, l'eau et une solution aqueuse contenant l'agent de transfert soufré qui est le composé A obtenu lors de l'essai n°1.

Sous agitation, on chauffe ensuite le pied de cuve à une température égale à 50°C.

En maintenant cette température constante à ± 2°C, on ajoute, pendant 2 heures et au moyen de pompes péristaltiques l'acide acrylique, les monomères hydrosolubles et les catalyseurs (persulfate et métabisulfite de sodium, respectivement Na₂S₂O₈ et Na₂S₂O₅). La température est ensuite maintenue constante à 50°C ± 2°C pendant 1 heure.

On augmente ensuite la température à 95°C et la solution est neutralisée avec de la soude jusqu'à pH = 8,5. On obtient alors une solution limpide, légèrement orangée, qu'on refroidit à température ambiante et qui contient un copolymère de l'acide acrylique avec des monomères hydrosolubles selon l'invention, neutralisé par le sodium.

Le tableau 5 indique la quantité (en grammes) des différents produits utilisés, ainsi que le poids moléculaire M_{w} (en g/mole), l'indice de polymolécularité Iₚ et le taux de conversion T_{c}, mesurés pour les copolymères obtenus, lesdits paramètres étant déterminés selon les méthodes précédemment décrites dans la présente demande.

**Tableau 5 : copolymères de l'acide acrylique avec des monomères hydrosolubles selon l'invention**

| **Essai n°** | **Constituants (masses en grammes)** | | | | | | **Propriétés des copolymères selon l'invention** | | |
|---|---|---|---|---|---|---|---|---|---|
| | **Eau** | **Acide acrylique** | **Monomère hydrosoluble** | **Agent de transfert *** | **Catalyseurs** | | **M_{w}** | **Iₚ** | **T_{c}** |
| | | | | | **Na₂S₂O₈** | **Na₂S₂O₅** | | | |
| 28 | 200 | 100 | 100 (AMA) | 69,2 | 1,755 | 0,501 | 7620 | 1,94 | >99 |
| 29 | 200 | 140 | 120 (acrylamide) | 69,2 | 1,755 | 0,501 | 5900 | 1,53 | >99 |
| 30 | 200 | 180 | 26,7 (MADQUAT) | 69,2 | 1,755 | 0,501 | 5350 | 1,42 | >99 |
| 31 | 200 | 170 | 30 (HEMA) | 69,2 | 1,755 | 0,501 | 5975 | 1,56 | >99 |
| 32 | 200 | 190 | 10 (AMPS) | 69,2 | 1,755 | 0,501 | 5330 | 1,45 | >99 |

| | | | | | | | | | |
|---|---|---|---|---|---|---|---|---|---|
| Iₚ : indice de polymolécularité M_{w} : poids moléculaire (en g/mole) T_{c} : taux de conversion (en %) AMA : acide méthacrylique AMPS : acide 2-acrylamido 2-méthyle 1-propane sulfonique MADQUAT : méthacrylate de triméthylammonium éthyle chlorure HEMA : méthacrylate d'éthylène glycol * la masse d'agent de transfert correspond à la masse d'une solution aqueuse contenant ledit agent de transfert, celui-ci y étant dilué à 22 % en poids. | | | | | | | | | |

Le tableau 5 démontre qu'on obtient des copolymères de l'acide acrylique avec des monomères hydrosolubles selon l'invention :
- ayant un indice de polymolécularité inférieur à 2,2 déterminé en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K ;
- ayant un poids moléculaire compris entre 1000 g/mole et 20000 g/mole ;
- et ayant un taux de conversion supérieur à 99 %.

### EXEMPLE 7

Cet exemple a pour objet d'illustrer la préparation de copolymères de l'acide acrylique avec des monomères hydrosolubles selon l'invention, et les copolymères selon l'invention ainsi obtenus.

Pour les essais n°33 à n°35, on commence par introduire, dans un réacteur de 1 litre muni d'une agitation mécanique et d'un chauffage de type bain d'huile :
- 346 grammes d'une solution aqueuse à 50 % en poids de monomère sec de méthacrylate de méthoxy polyéthylèneglycol de poids moléculaire 5000 g/mole ;
- 30 grammes d'acide acrylique ;
- une quantité donnée de l'agent de transfert soufré de formule A obtenu lors de l'essai n°1 (les essais n°33 à n°35 mettent respectivement en oeuvre 6,3 grammes, 12,6 grammes et 25,2 grammes dudit agent de transfert).

Sous agitation, on chauffe ensuite le pied de cuve à une température égale à 70°C, et on introduit une solution aqueuse constituée de :
- 0,8 gramme de (NH₄)₂ S₂O₈ ;
- 10 grammes d'eau ;
On laisse réagir pendant 2 heures en maintenant la température à 82 ± 2°C.

La solution obtenue est ensuite neutralisée avec de la soude jusqu'à pH = 7,1. On obtient alors une solution qu'on refroidit à température ambiante et qui contient un copolymère de l'acide acrylique avec des monomères hydrosolubles selon l'invention, neutralisé par le sodium.

Le tableau 6 indique le poids moléculaire M_{w} (en g/mole), l'indice de polymolécularité Iₚ et le taux de conversion T_{c}, mesurés pour les copolymères obtenus, lesdits paramètres étant déterminés selon les méthodes précédemment décrites dans la présente demande.

**Tableau 6 : copolymères de l'acide acrylique avec des monomères hydrosolubles selon l'invention**

| **Essai n°** | **Paramètres des copolymères selon l'invention** | | |
|---|---|---|---|
| | **M_{w}** | **Iₚ** | **T_{c}** |
| 33 | 29470 | 1,44 | >99 |
| 34 | 52300 | 1,45 | >99 |
| 35 | 99500 | 1,67 | >99 |

| | | | |
|---|---|---|---|
| Iₚ : indice de polymolécularité M_{w} : poids moléculaire (en g/mole) T_{c} : taux de conversion (en %) | | | |

Le tableau 6 démontre qu'on obtient des copolymères de l'acide acrylique avec des monomères hydrosolubles selon l'invention :
- ayant un indice de polymolécularité inférieur à 2,2 déterminé en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K
- ayant un poids moléculaire compris entre 1000 g/mole et 100000 g/mole,
- et ayant un taux de conversion supérieur à 99 %.

### EXEMPLE 8

Cet exemple a pour objet d'illustrer la préparation d'un homopolymère de l'acide acrylique selon l'invention, et l'homopolymère selon l'invention ainsi obtenu.

### Essai n°36

Préparation du composé B de formule (I) : 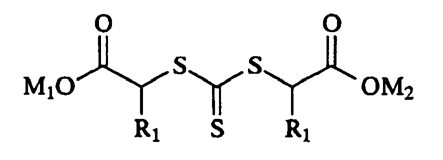
- où R₁ désigne le radical alkyle ayant 6 atomes de carbone ;
- et M₁ et M₂ désignent l'atome de sodium Na.

Dans un bécher sous agitation magnétique, on pèse :
- 30,4 grammes d'eau ;
- 9,9 grammes d'acide 2 bromo-octanoïque.

On neutralise le mélange avec une solution de soude à 50 % jusqu'à obtenir un pH égal à 6,5. La température augmente jusqu'à 50 °C. On obtient alors une solution homogène qu'on refroidit à 40 °C.

On coule ensuite goutte à goutte et en 20 minutes 13,7 grammes d'une solution aqueuse de trithiocarbonate disodique à 25 %.

On laisse réagir pendant 2 heures sous agitation. La réaction de S alkylation est légèrement exothermique et la température augmente jusqu'à 43 °C, alors que le pH s'établit à 11,5.

On obtient une pâte jaune contenant le composé B.

### Essai n°37

Dans un réacteur de 1 litre muni d'une agitation mécanique et d'un chauffage de type bain d'huile, on introduit :
- 300 grammes d'eau ;
- 100 grammes d'acide acrylique ;
- 23,53 grammes d'une solution aqueuse à 17,1 % (en poids sec de polymère) contenant le composé B obtenu selon l'essai n°36 ;
- 0,8 gramme d'un initiateur de polymérisation qui est le 4,4' azobis (4- cyano pentanoïque) commercialisé par la société Aldrich™ sous le nom V501.

Sous agitation, on chauffe le mélange jusqu'à une température égale à 100 °C. On maintient ensuite la température à 95 °C pendant 2 heures. On obtient alors une solution limpide, légèrement orangée, qu'on refroidit à température ambiante.

Cette solution est neutralisée avec de la soude jusqu'à pH = 8,5 ; on obtient alors une solution qui contient un homopolymère de l'acide acrylique selon l'invention neutralisé par le sodium, de poids moléculaire égal à 13240 g/mole, avec un indice de polymolécularité égal à 1,83 et avec un taux de conversion supérieur à 99 % (ces dernières grandeurs étant mesurées selon les méthodes précédemment décrites).

### EXEMPLE 9

Cet exemple a pour objet d'illustrer l'utilisation selon l'invention d'homopolymères de l'acide acrylique selon l'invention, comme agent de dispersion de matière minérale qui est du carbonate de calcium précipité.

Cet exemple illustre également ladite dispersion aqueuse de matière minérale selon l'invention.

Pour les essais n°38 à n°47, on introduit dans un bécher de 2 litres équipé d'un moteur actionnant une pale d'agitation de diamètre 70 mm :
- 465 grammes d'eau ;
- 8 grammes sec de l'homopolymère de l'acide acrylique selon l'invention à tester ;
- 1100 grammes sec d'un carbonate de calcium précipité commercialisé par la société SOLVAY™ sous le nom de SOCAL™ P3 ;
La dispersion aqueuse obtenue est maintenue à un pH compris entre 9 et 9,5 par addition de soude.

Pour la dispersion ainsi obtenue, on détermine sa viscosité Brookfield™ à 100 tours par minute, selon la procédure précédemment décrite dans la présente demande.
Les résultats correspondants apparaissent dans le tableau 7.

**Tableau 7 : viscosité Brookfield™ mesurée à 100 tours par minute pour des dispersions aqueuses de carbonate de calcium précipité selon l'invention, obtenues par utilisation selon l'invention d'homopolymères de l'acide acrylique selon l'invention, comme agents dispersants.**

| **Essai n°** | **Homopolymère de l'acide acrylique selon l'invention, obtenu pour l'essai n°** | **Viscosité Brookfield™ à 100 tours par minute** |
|---|---|---|
| 38 | 22 | 26500 |
| 39 | 23 | 26200 |
| 40 | 24 | 19700 |
| 41 | 25 | 12200 |
| 42 | 26 | 9400 |
| 43 | 27 | 6400 |
| 44 | 15 | 4500 |
| 45 | 16 | 4050 |
| 46 | 19 | 2900 |
| 47 | 20 | 2100 |

Les résultats du tableau 7 démontrent que les homopolymères de l'acide acrylique selon l'invention, permettent de disperser du carbonate de calcium précipité dans l'eau.

Ces résultats démontrent donc qu'il est possible d'obtenir des dispersions aqueuses de carbonate de calcium précipité selon l'invention, par utilisation selon l'invention d'homopolymères de l'acide acrylique selon l'invention, comme agent dispersant de matières minérales.

Enfin, les viscosités Brookfield™ mesurées à 100 tours par minute démontrent que les dispersions aqueuses de carbonate de calcium précipité selon l'invention, peuvent être utilisées dans des formulations aqueuses, et notamment dans des peintures aqueuses.

### EXEMPLE 10

Cet exemple a pour objet d'illustrer l'utilisation selon l'invention d'un homopolymère de l'acide acrylique selon l'invention, comme agent de dispersion de matière minérale qui est du carbonate de calcium précipité commercialisé par la société SOLVAY™ sous le nom de SOCAL™ P3.

Cet exemple illustre l'influence de la quantité d'homopolymère utilisé.

Cet exemple illustre également ladite dispersion aqueuse de matière minérale selon l'invention.

Pour les essais n°48 à n°60, on réalise diverses dispersions aqueuses de carbonate de calcium précipité, pour des quantités variables d'un homopolymère de l'acide acrylique selon l'invention (obtenu pour l'essai n°27), selon la même procédure que celle utilisée au cours de l'exemple 9.

Pour les dispersions obtenues, on détermine la viscosité Brookfield™ à 100 tours par minute, selon la procédure précédemment décrite dans la présente demande.

Les résultats correspondants apparaissent dans le tableau 8.

**Tableau 8 : viscosité Brookfield™ mesurée à 100 tours par minute pour des dispersions de carbonate de calcium précipité selon l'invention, obtenues par utilisation d'une quantité donnée (% en poids sec d'homopolymère par rapport au poids sec de matière minérale) d'un homopolymère de l'acide acrylique selon l'invention, comme agent dispersant.**

| **Essai n°** | **% en poids de l'homopolymère de l'acide acrylique selon l'essai n°27** | **Viscosité Brookfield™ à 100 tours par minute** |
|---|---|---|
| 48 | 0,20 | 6500 |
| 49 | 0,40 | 3625 |
| 50 | 0,41 | 2500 |
| 51 | 0,42 | 1900 |
| 52 | 0,43 | 1540 |
| 53 | 0,44 | 1340 |
| 54 | 0,45 | 1180 |
| 55 | 0,46 | 1040 |
| 56 | 0,49 | 960 |
| 57 | 0,52 | 920 |
| 58 | 0,54 | 890 |
| 59 | 0,57 | 880 |
| 60 | 0,60 | 900 |

Les résultats du tableau 8 démontrent que l'homopolymère de l'acide acrylique selon l'invention, permet de disperser du carbonate de calcium précipité dans l'eau. Ces résultats démontrent donc qu'il est possible d'obtenir des dispersions aqueuses de carbonate de calcium précipité selon l'invention, par utilisation selon l'invention de cet homopolymère de l'acide acrylique, comme agent dispersant de matières minérales.

Enfin, les viscosités Brookfield™ mesurées à 100 tours par minute démontrent que les dispersions aqueuses de carbonate de calcium précipité selon l'invention, peuvent être utilisées dans des formulations aqueuses, et notamment dans des peintures aqueuses.

### EXEMPLE 11

Cet exemple a pour objet d'illustrer l'utilisation directe d'homopolymères de l'acide acrylique selon l'invention, comme agent dispersant de matières minérales dans des formulations de peinture aqueuse.

Pour les essais n°61 à n°64, on réalise des formulations de peinture aqueuse, selon des techniques bien connues de l'homme du métier. La composition desdites formulations apparaît dans le tableau 9.

### Essai n°61

Cet essai illustre l'art antérieur et met en oeuvre 0,12 % en poids sec par rapport au poids total de la formulation de peinture aqueuse, d'un dispersant acrylique de l'art antérieur à base d'un homopolymère de l'acide acrylique, de poids moléculaire égal à 13000 g/mole et avec un indice de polymolécularité égal à 3.

### Essai n°62

Cet essai illustre l'invention et met en oeuvre 0,095 % en poids sec de polymère par rapport au poids total de la formulation, du copolymère selon l'invention obtenu pour l'essai n°16.

### Essai n°63

Cet essai illustre l'invention et met en oeuvre 0,095 % en poids sec de polymère par rapport au poids total de la formulation, du copolymère selon l'invention obtenu pour l'essai n°6.

### Essai n°64

Cet essai illustre l'invention et met en oeuvre 0,095 % en poids sec de polymère par rapport au poids total de la formulation, du copolymère selon l'invention obtenu pour l'essai n°18.

Pour chacune de ces formulations, on détermine ensuite :
- les viscosités Brookfield™ à 10 et 100 tours par minute, selon la méthode précédemment décrite, et notées respectivement µ^{B}₁₀ (mPa.s) et µ^{B}100 (mPa.s) ;
- la viscosité ICI™ à partir d'un viscosimètre cône-plan, dit viscosimètre ICI™, commercialisé par la société ERICHSEN™, la mesure étant réalisée à 25 °C et notée µ^{I} (mPa.s) ;
- la viscosité Stormer™ à partir d'un viscosimètre Stormer de type KU-1 commercialisé par la société Brookfield™, équipé d'un système de mesure unique, la mesure étant réalisée à 25 °C et notée µ^{S} (K.U).
Ces mesures de viscosité sont réalisées aux instants t=0 et t=24heures.

Ces paramètres figurent dans le tableau 9.

**Tableau 9 : composition et viscosités des différentes peintures aqueuses formulées par utilisation directe d'un dispersant de l'art antérieur (essai n°61) et par utilisation directe selon l'invention de dispersants selon l'invention (essais n°62, 63 et 64).**

| | | **Essai n°** | 61 | 62 | 63 | 64 |
|---|---|---|---|---|---|---|
| **Constituants des Formulations de peinture aqueuse (masses en grammes)** | | Eau | 235 | 234,3 | 234,1 | 234,3 |
| | | Ammoniaque | 2,6 | 2,6 | 2,6 | 2,6 |
| | | Dispersant acrylique de l'art antérieur | 3 | 0 | 0 | 0 |
| | | Polymère selon l'essai n°16 | 0 | 3,7 | 0 | 0 |
| | | Polymère selon l'essai n°6 | 0 | 0 | 3,9 | |
| | | Polymère selon l'essai n°18 | 0 | 0 | 0 | 3,7 |
| | | Mergal™ K6N | 2 | 2 | 2 | 2 |
| | | Byk™ 34 | 1,4 | 1,4 | 1,4 | 1,4 |
| | | Ti02 RL68 | 41 | 41 | 41 | 41 |
| | | Durcal™ 2 | 328 | 328 | 328 | 328 |
| | | Hydrocarb™ | 215 | 215 | 215 | 215 |
| | | Rhodopas™ DS 2800 | 160 | 160 | 160 | 160 |
| | | Viscoatex™ 46 | 12 | 12 | 12 | 12 |
| **Viscosités des formulations de peinture de peinture aqueuse** | Instant t = 0 | µ^{B}₁₀ | 15000 | 15200 | 15300 | 16000 |
| | | µ^{B}₁₀₀ | 2780 | 3000 | 2910 | 3040 |
| | | µ^{I} | 1,2 | 1,3 | 1,2 | 1,2 |
| | | µ^{S} | 98 | 100 | 100 | 100 |
| | Instant t = 24 heures | µ^{B}₁₀ µ^{B}₁₀ | 11300 | 11400 | 10600 | 11400 |
| | | µ^{B}₁₀₀ | 2450 | 2620 | 2480 | 2600 |
| | | µ^{I} | 1,4 | 1,4 | 1,4 | 1,4 |
| | | µ^{S} | 95 | 95 | 95 | 96 |

Dispersant acrylique de l'art antérieur désigne un dispersant de l'art antérieur à base d'un homopolymère de l'acide acrylique, de poids moléculaire égal à 13000 g/mole et avec un indice de polymolécularité égal à 3.

Mergal™ K6N est un bactéricide commercialisé par la société TROY™.
Byk™ 34 est un agent anti-mousse commercialisé par la société BYK™.
TiO2 RL68 est du dioxyde de titane commercialisé par la société DUPONT™.
Durcal™ 2 est un carbonate de calcium commercialisé par la société OMYA™.
Hydrocarb™ est une suspension de carbonate de calcium commercialisée par la société OMYA™.
Rhodopas™ DS 2800 est une solution aqueuse (à 28 % en poids de polymère sec par rapport au poids total de la solution) de liant styrène acrylique commercialisé par la société RHODIA™.
Viscoatex™ 46 est un épaississant acrylique commercialisé par la société COATEX™.
µ^{B}₁₀ (mPa.s) et µ^{B}₁₀₀ (mPa.s) désignent respectivement les viscosités Brookfield™ mesurées à 10 et 100 tours par minute.
µ^{I} (mPa.s) désigne la viscosité ICI™.
µ^{S} (K.U) désigne la viscosité Stormer™.

Les résultats du tableau 9 démontrent que les polymères selon l'invention permettent d'obtenir des peintures aqueuses selon l'invention, ayant des viscosités similaires à la peinture formulée avec un dispersant de l'art antérieur, alors qu'elles contiennent une proportion moindre de dispersant (0,095 % pour l'invention contre 0,120 % pour l'art antérieur, exprimé en poids sec de polymère par rapport au poids total de la formulation de peinture) : par conséquent, ces résultats démontrent que les polymères selon l'invention sont des dispersants plus efficaces que ceux de l'art antérieur, lorsqu'ils sont utilisés comme additifs directs dans une formulation de peinture aqueuse.

### EXEMPLE 12

Cet exemple a pour objet d'illustrer l'utilisation directe selon l'invention de copolymères de l'acide acrylique avec des monomères hydrosolubles, comme agents dispersants dans des formulations cimentaires de mortiers.

Cet exemple illustre aussi les mortiers selon l'invention ainsi obtenus.

### Essai n°65

Cet essai illustre l'art antérieur.
On réalise une formulation de mortier à partir de 450 grammes de ciment 42.5 R CEM I Gaurain, 1350 grammes de sable normalisé ISO 679 et 191 grammes d'eau.

Ce mortier donne un étalement à la table à choc (20 coups) de :
- 12 cm à l'instant T = 0 ;
- 10.5 cm à l'instant T = 30 minutes ;
- 10 cm à l'instant T = 60 minutes.

### Essai n°66

Cet essai illustre l'invention.

On réalise une formulation de mortier à partir de 450 grammes de ciment 42.5 R CEM I Gaurain, 1350 grammes de sable normalisé ISO 679 et 191 grammes d'eau, et de 2,6 grammes du polymère selon l'invention obtenu pour l'essai n°34.

Ce mortier donne un étalement à la table à choc (20 coups) de :
- 21,5 cm à l'instant T = 0 ;
- 19,6 cm à l'instant T = 30 minutes ;
- 19,2 cm à l'instant T = 60 minutes.

Ces résultats démontrent que le polymère selon l'invention permet non seulement de fluidifier la composition cimentaire mais permet en plus de maintenir cette fluidité au cours du temps : il agit donc tel un dispersant efficace comme additif direct dans une formulation de cimentaire mortier.

### Essai n°67

Cet essai illustre l'art antérieur.
On réalise une formulation de mortier à partir de 450 grammes de ciment 42.5 R CEM I Gaurain, 1590 grammes de sable normalisé ISO 679 et 248 grammes d'eau.
Ce mortier donne un étalement à la table à choc (20 coups) de 20 cm à l'instant T = 0.

### Essai n°68

Cet essai illustre l'invention.
On réalise une formulation de mortier à partir de 450 grammes de ciment 42.5 R CEM I Gaurain, 1731 grammes de sable normalisé ISO 679 et 212 grammes d'eau, ainsi que 2,12 grammes du polymère selon l'invention obtenu pour l'essai n°34.

Ces résultats démontrent que le polymère selon l'invention permet de réduire sensiblement la quantité d'eau tout en augmentant la quantité de sable. Il agit donc tel un dispersant efficace comme additif direct dans une formulation de mortier.

En outre, la réduction de la quantité d'eau et l'augmentation de la quantité de sable se traduisent par un renforcement notable de la résistance mécanique de la composition cimentaire selon l'invention.

### EXEMPLE 13

Cet exemple a pour objet d'illustrer l'utilisation directe selon l'invention de copolymères de l'acide acrylique avec des monomères hydrosolubles, comme agents dispersants dans des formulations cimentaires de plâtres.
Cet exemple illustre aussi les plâtres selon l'invention ainsi obtenus.

### Essai n°69

Cet essai illustre l'art antérieur.
On réalise une formulation de plâtre à partir de 179,3 grammes de plâtre de Paris et 110 grammes d'eau.
Cette formulation possède un étalement mesuré à l'anneau de Schmidt égal à 17,6 cm.

### Essai n°70

Cet essai illustre l'invention.
On réalise une formulation de plâtre à partir de 179,3 grammes de plâtre de Paris, de 110 grammes d'eau, et de 0,51 gramme du polymère selon l'invention obtenu pour l'essai n°34.
Cette formulation possède un étalement mesuré à l'anneau de Schmidt égal à 26 cm.

Ces résultats démontrent que l'utilisation du polymère selon l'invention permet d'augmenter sensiblement la fluidité de la formulation à base de plâtre : le polymère selon l'invention se comporte donc comme un agent dispersant efficace en tant qu'additif direct dans une formulation de plâtre.

### Essai n°71

Cet essai illustre l'invention.
On réalise une formulation de plâtre en utilisant les mêmes matières premières que lors de l'essai n°69, mais en diminuant la quantité d'eau utilisée et en ajustant la quantité de polymère de manière à obtenir un étalement identique à l'essai précédent.

On utilise pour ce faire 179,3 grammes de plâtre de Paris, 73 grammes d'eau, et 2,56 grammes du polymère selon l'essai n°34.

L'étalement de cette formulation à base de plâtre est identique à celle obtenue pour l'essai n°69 (17,6 cm) mais la quantité d'eau est fortement diminuée (-33,6 %) dans la composition de plâtre selon l'invention.

Le plâtre résultant contient nettement moins d'eau ce qui, dans le cas de son utilisation pour la fabrication de plaques ou de carreaux de plâtre permet une économie substantielle d'énergie lors du séchage.

Ces résultats démontrent donc que le polymère selon l'invention se comporte comme un agent dispersant efficace en tant qu'additif direct dans une formulation de plâtre.
De plus la résistance à la flexion et à la compression des produits résultants (carreaux, plaques, ... ) est augmentée sensiblement de part la diminution de la porosité crée par l'eau excédentaire.

### EXEMPLE 14

Cet exemple a pour objet d'illustrer l'utilisation selon l'invention de copolymères de l'acide acrylique avec des monomères hydrosolubles, comme agents de broyage de matières minérales.

Cet exemple illustre également l'utilisation desdites suspensions de matières minérales dans la formulation de céramiques.

### Essai n°72

Cet essai illustre l'art antérieur.
Une formulation de terres argileuses, de sable et de feldspath est broyée en voie humide afin d'obtenir une suspension fine pouvant être utilisée telle quelle pour fabriquer des pièces de céramique (éviers, sanitaires) ou séchée par atomisation afin d'obtenir une poudre pouvant ensuite être pressée afin de fabriquer des carreaux de céramique.

Ladite formulation contient 200 grammes d'un mélange d'argile, de feldspath et de sable, et 94 grammes d'eau. Elle est broyée au moyen d'un broyeur planétaire à grande vitesse contenant 300 grammes de billes, et ce pendant 13 minutes.

La formulation ne peut être extraite du broyeur.

### Essai n°73

Cet essai illustre l'invention.
Une formulation de terres argileuses, de sable et de feldspath est broyée en voie humide afin d'obtenir une suspension fine pouvant être utilisée telle quelle pour fabriquer des pièces de céramique (éviers, sanitaires) ou séchée par atomisation afin d'obtenir une poudre pouvant ensuite être pressée afin de fabriquer des carreaux de céramique.

Ladite formulation contient 200 grammes d'un mélange d'argile, de feldspath et de sable, 94 grammes d'eau, et 0,8 gramme d'un mélange de 80 % en poids de silicate de sodium et de 20 % en poids de polymère de l'invention obtenu lors de l'essai n°27. Elle est broyée au moyen d'un broyeur planétaire à grande vitesse contenant 300 grammes de billes, et ce pendant 13 minutes.

La dispersion broyée possède une viscosité mesurée à la coupe Ford N°4 de 19,5 secondes.

Ces résultats démontrent que le polymère selon l'invention est un agent de broyage efficace pour des suspensions aqueuses de matières minérales utilisables dans la céramique.

### EXEMPLE 14

Cet exemple a pour objet d'illustrer l'utilisation selon l'invention d'un homopolymère de l'acide acrylique, comme agent antitartre dans une composition pour traitement de l'eau.
Cet exemple illustre également la composition pour traitement de l'eau ainsi obtenue.

### Essai n°74

Cet essai illustre l'art antérieur.
Une masse de 500 grammes d'eau naturelle ayant une teneur en sels alcalino-terreux de 300 mg/l exprimés en carbonate de calcium est placée dans un ballon en verre muni d'un réfrigérant vertical. Cette eau est portée à reflux et des échantillons en sont prélevés, filtrés à 0,45 micromètres et dosés en calcium libre au début de l'ébullition, à 15 et 30 minutes. On mesure ensuite la dureté résiduelle (mesurée par complexométrie) de l'eau à ces 3 temps.

### Essai n°75

Cet essai illustre l'invention.
Une masse de 500 grammes d'eau naturelle ayant une teneur en sels alcalino-terreux de 300 mg/l exprimés en carbonate de calcium est additivée de 5 mg/l du polymère selon l'invention obtenu pour l'essai n°13, est placée dans un ballon en verre muni d'un réfrigérant vertical. Cette eau est portée à reflux et des échantillons en sont prélevés, filtrés à 0,45 micromètres et dosés en calcium libre au début de l'ébullition, à 15 et 30 minutes. On mesure ensuite la dureté résiduelle (mesurée par complexométrie) de l'eau à ces 3 temps.

Les résultats de dureté résiduelle de l'eau obtenus pour les essais n°74 et n°75 apparaissent dans le tableau 10.

**Tableau 10 : dureté résiduelle mesurée pour des compositions de traitement de l'eau**

| Essai n° | Dureté résiduelle à T = 0 | Dureté résiduelle à T = 15 min | Dureté résiduelle à T = 30 min |
|---|---|---|---|
| 75 | 300 ppm | 213 ppm | 165 ppm |
| 74 | 300 ppm | 120 ppm | 90 ppm |

Ces résultats démontrent que le polymère selon l'invention permet de maintenir une dureté résiduelle sensible évitant par la même le dépôt du tartre sur les parois.

## Revendications

1. Homopolymères de l'acide acrylique et/ou copolymères de l'acide acrylique avec des monomères hydrosolubles **caractérisés en ce qu'**ils ont un indice de polymolécularité inférieur à 2,2 déterminé en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K, et contiennent en bout de chaîne un motif qui répond à la formule (I) : 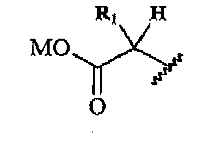
- où R₁ désigne un radical alkyle ayant de 1 à 10 atomes de carbone, un radical aromatique éventuellement substitué par une chaîne alkyle ayant de 1 à 4 atomes de carbone ;
- et où M désigne l'atome d'hydrogène, un sel d'amine, l'ammonium ou un cation alcalin.
et **caractérisés en ce qu'**ils sont obtenus par un procédé de polymérisation radicalaire contrôlée de type RAFT, dans l'eau, utilisant comme agent de transfert des composés de formule (I') : 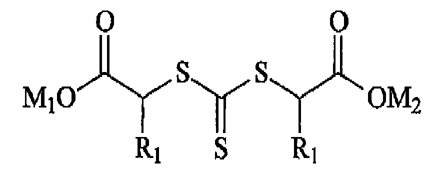
- où R₁ désigne un radical alkyle ayant de 1 à 10 atomes de carbone, un radical aromatique éventuellement substitué par une chaîne alkyle ayant de 1 à 4 atomes de carbone ;
- et où M₁ et M₂ désignent l'atome d'hydrogène, un sel d'amine, l'ammonium ou un cation alcalin, et sont identiques ou différents,
et **caractérisés en ce qu'**ils présentent une masse moléculaire moyenne en poids (M_{w}) comprise entre 1000 g/mole et 100 000 g/mole, préférentiellement entre 1000 g/mole et 50 000 g/mol, très préférentiellement entre 1000 g/mole et 30 000 g/mole, de manière extrêmement préférentielle entre 1000 g/mole et 20 000 g/mole.

2. Homopolymères de l'acide acrylique et/ou copolymères de l'acide acrylique avec des monomères hydrosolubles selon la revendication 1, **caractérisés en ce que** les amines sont choisies parmi les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine.

3. Homopolymères de l'acide acrylique et/ou copolymères de l'acide acrylique avec des monomères hydrosolubles selon la revendication 1, **caractérisés en ce que** les cations alcalins sont choisis parmi le sodium, le potassium, le lithium.

4. Homopolymères de l'acide acrylique et/ou copolymères de l'acide acrylique avec des monomères hydrosolubles selon l'une des revendications 1 à 3, **caractérisés en ce que** R₁ est un radical alkyle ayant de 2 à 6 atomes de carbone, et M désigne l'atome d'hydrogène, le sodium ou le potassium.

5. Homopolymères de l'acide acrylique et/ou copolymères de l'acide acrylique avec des monomères hydrosolubles selon la revendication 4, **caractérisés en ce que** R₁ est un radical alkyle ayant de 2 à 6 atomes de carbone, M désigne l'atome d'hydrogène ou le sodium.

6. Homopolymères de l'acide acrylique et/ou copolymères de l'acide acrylique avec des monomères hydrosolubles selon la revendication 5, **caractérisés en ce que** R₁ est un radical alkyle ayant de 2 à 4 atomes de carbone, et M désigne l'atome d'hydrogène ou le sodium.

7. Homopolymères de l'acide acrylique et/ou copolymères de l'acide acrylique avec des monomères hydrosolubles selon la revendication 6, **caractérisés en ce que** R₁ est le radical alkyle ayant 4 atomes de carbone, et M désigne l'atome d'hydrogéne ou le sodium.

8. Homopolymères de l'acide acrylique et/ou copolymères de l'acide acrylique avec des monomères hydrosolubles selon la revendication 7, **caractérisés en ce que** R₁ est le radical alkyle ayant 4 atomes de carbone, et M désigne le sodium.

9. Copolymères de l'acide acrylique avec des monomères hydrosolubles selon l'une des revendications 1 à 8, **caractérisés en ce que** les monomères hydrosolubles sont choisis parmi l'acide méthacrylique, l'acide itaconique, maléique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybeuzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acrylate de méthoxy polyéthylène glycol, le méthacrylate de méthoxy polyéthylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium, ainsi que leurs mélanges.

10. Homopolymères de l'acide acrylique et/ou copolymères de l'acide acrylique avec des monomères hydrosolubles selon l'une des revendications 1 à 9, **caractérisés en ce qu'**ils présentent une masse moléculaire moyenne en poids (M_{w}) comprise entre 1 000 g/mole et 100 000 g/mole, préférentiellement entre 1 000 g/mole et 50 000 g/mole, très préférentiellement entre 1 000 g/mole et 30 000 g/mole, de manière extrêmement préférentielle entre 1 000 g/mole et 20 000 g/mole, déterminée en milieux aqueux par une méthode chromatographique par perméation de gel (GPC) ayant pour étalon une série de 5 étalons de polyacrylate de sodium fourni par Polymer Standard Service sous les références PAA 18K, PAA 8K, PAA 5K, PAA 4K et PAA 3K.

11. Homopolymères de l'acide acrylique et/ou copolymères de l'acide acrylique avec des monomères hydrosolubles selon l'une des revendications 1 à 10, **caractérisés en ce qu'**ils présentent un taux de conversion supérieur à 90 %, préférentiellement supérieur à 95 %, et très préférentiellement supérieur à 99 %, déterminé par chromatographie liquide à haute performance (HPLC), où les composants constitutifs du mélange sont séparés sur une phase stationnaire, et détectés par un détecteur UV ; après étalonnage du détecteur, l'aire du pic correspondant au composé acrylique permet d'obtenir la quantité d'acide acrylique résiduel.

12. Homopolymères de l'acide acrylique et/ou copolymères de l'acide acrylique avec des monomères hydrosolubles selon l'une des revendications 1 à 11, **caractérisés en ce qu'**ils sont soit sous leur forme acide, c'est-à-dire non neutralisée, soit partiellement ou totalement neutralisés par un ou plusieurs agents de neutralisation monovalents, divalents, trivalents ou de valence plus élevée ou leurs mélanges.

13. Homopolymères de l'acide acrylique et/ou copolymères de l'acide acrylique avec des monomères hydrosolubles selon la revendication 12, **caractérisés en ce que** les agents de neutralisation monovalents sont choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que les éthanolamines, la mono et diéthylamine ou encore la cyclohexylamine.

14. Homopolymères de l'acide acrylique et/ou copolymères de l'acide acrylique avec des monomères hydrosolubles selon la revendication 12, **caractérisés en ce que** les agents de neutralisation divalents, trivalents ou de valence plus élevée sont choisis dans le groupe constitué par les composés contenant des cations divalents alcalino-terreux, en particulier le magnésium et le calcium, ou encore le zinc, de même que parmi les cations trivalents, dont en particulier l'aluminium, ou encore par des composés contenant des cations de valence plus élevée.

15. Utilisation comme agents d'aide au broyage et/ou d'aide au cobroyage de matières minérales, d'homopolymères de l'acide acrylique et/ou de copolymères de l'acide acrylique avec des monomères hydrosolubles, selon l'une des revendications 1 à 14.

16. Utilisation comme agents d'aide au broyage et/ou d'aide au cobroyage de matières minérales, d'homopolymères de l'acide acrylique et/ou de copolymères de l'acide acrylique avec des monomères hydrosolubles selon la revendication 15, **caractérisée en ce que** les matières minérales sont choisies parmi le carbonate de calcium naturel ou synthétique, les dolomies, le kaolin, le talc, le gypse, l'oxyde de titane, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.

17. Utilisation comme agents d'aide au broyage et/ou d'aide au cobroyage de matières minérales, d'homopolymères de l'acide acrylique et/ou de copolymères de l'acide acrylique avec des monomères hydrosolubles selon la revendication 16, **caractérisée en ce que** les matières minérales sont un carbonate de calcium choisi parmi le marbre, la calcite, la craie ou leurs mélanges.

18. Utilisation comme agents d'aide au broyage et/ou d'aide au cobroyage de matières minérales, d'homopolymères de l'acide acrylique et/ou de copolymères de l'acide acrylique avec des monomères hydrosolubles selon l'une des revendications 15 à 17, **caractérisée en ce qu'**on met en oeuvre de 0,05 % à 5 % en poids sec des polymères selon l'invention par rapport au poids sec de matières minérales.

19. Utilisation comme agents d'aide au broyage et/ou d'aide au cobroyage de matières minérales, d'homopolymères de l'acide acrylique et/ou de copolymères de l'acide acrylique avec des monomères hydrosolubles selon la revendication 18, **caractérisée en ce qu'**on met en oeuvre de 0,1 % à 3 % en poids sec des polymères selon l'invention par rapport au poids sec de matières minérales.

20. Utilisation comme agents de dispersion de matières minérales, d'homopolymères de l'acide acrylique et/ou de copolymères de l'acide acrylique avec des monomères hydrosolubles, selon l'une des revendications 1 à 14.

21. Utilisation comme agents de dispersion de matières minérales, d'homopolymères de l'acide acrylique et/ou de copolymères de l'acide acrylique avec des monomères hydrosolubles selon la revendication 20, **caractérisée en ce que** les matières minérales sont choisies parmi le carbonate de calcium naturel ou synthétique, les dolomies, le kaolin, le talc, le gypse, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.

22. Utilisation comme agents de dispersion de matières minérales, d'homopolyméres de l'acide acrylique et/ou de copolymères de l'acide acrylique avec des monomères hydrosolubles selon la revendication 21, **caractérisée en ce que** les matières minérales sont un carbonate de calcium choisi parmi le marbre, la calcite, la craie ou leurs mélanges.

23. Utilisation comme agents de dispersion de matières minérales, d'homopolymères de l'acide acrylique et/ou de copolymères de l'acide acrylique avec des monomères hydrosolubles selon l'une des revendications 20 à 22, **caractérisée en ce qu'**on met en oeuvre de 0,05 % à 5 % en poids sec des polymères selon l'invention par rapport au poids sec de matières minérales.

24. Utilisation comme agents de dispersion de matières minérales, d'homopolymeres de l'acide acrylique et/ou de copolymères de l'acide acrylique avec des monomères hydrosolubles selon la revendication 23, **caractérisée en ce qu'**on met en oeuvre de 0,1 % à 3 % en poids sec des polymères selon l'invention par rapport au poids sec de matières minérales.

25. Suspensions aqueuses de matières minérales broyées et/ou cobroyées par l'utilisation comme agent d'aide au broyage et/ou d'aide au cobroyage des polymères selon l'une des revendications 15 à 19, **caractérisées en ce que** les matières minérales sont choisies parmi le carbonate de calcium naturel ou synthétique, les dolomies, le kaolin, le talc, le gypse, l'oxyde de titane, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxydc de titane.

26. Suspensions aqueuses de matières minérales broyées et/ou cobroyées par l'utilisation comme agent d'aide au broyage et/ou d'aide au cobroyage des polymères selon la revendication 25, **caractérisées en ce que** les matières minérales sont un carbonate de calcium choisi parmi le marbre, la calcite, la craie ou leurs mélanges.

27. Suspensions aqueuses de matières minérales broyées et/ou cobroyées par l'utilisation comme agent d'aide au broyage et/ou d'aide au cobroyage des polymères selon l'une des revendications 25 ou 26 **caractérisées en ce qu'**on met en oeuvre de 0,05 % à 5 % en poids sec des polymères par rapport au poids sec de matières minérales.

28. Suspensions aqueuses de matières minérales broyées et/ou cobroyées par l'utilisation comme agent d'aide au broyage et/ou d'aide au cobroyage des polymères selon la revendication 27, **caractérisées en ce qu'**on met en oeuvre de 0,1 % à 3 % en poids sec des polymères selon l'invention par rapport au poids sec de matières minérales.

29. Dispersions aqueuses de matières minérales obtenues par l'utilisation des polymères comme agent dispersant selon l'une des revendications 20 à 24, **caractérisées en ce que** les matières minérales sont choisies parmi le carbonate de calcium naturel ou synthétique, les dolomies, le kaolin, le talc, le gypse, le blanc satin ou encore le trihydroxyde d'aluminium, le mica et le mélange entre elles d'au moins deux de ces charges, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.

30. Dispersions aqueuses de matières minérales obtenues par l'utilisation des polymères comme agent dispersant selon la revendication 29, **caractérisées en ce que** les matières minérales sont un carbonate de calcium choisi parmi le marbre, la calcite, la craie ou leurs mélanges.

31. Dispersions aqueuses de matières minérales obtenues par l'utilisation des polymères comme agent dispersant selon l'une des revendications 29 ou 30 **caractérisées en ce qu'**on met en oeuvre de 0,05 % à 5 % en poids sec des polymères par rapport au poids sec de matières minérales.

32. Dispersions aqueuses de matières minérales obtenues par l'utilisation des polymères comme agent dispersant selon la revendication 31, **caractérisées en ce qu'**on met en oeuvre de 0,1 % à 3 % en poids sec des polymères selon l'invention par rapport au poids sec de matières minérales.

33. Utilisation des suspensions et des dispersions aqueuses de matières minérales selon l'une des revendications 25 à 32, dans les formulations papetières, telles que dans la formulation des sauces de couchage et de la charge de masse.

34. Utilisation des suspensions et des dispersions aqueuses de matières minérales selon l'une des revendications 25 à 32, dans les formulations de peinture.

35. Utilisation des suspensions et des dispersions aqueuses de matières minérales selon l'une des revendications 25 à 32, dans les formulations plastique.

36. Utilisation des suspensions et des dispersions aqueuses de matières minérales selon l'une des revendications 25 à 32 dans des formulations de ciment.

37. Utilisation des suspensions et des dispersions aqueuses de matières minérales selon l'une des revendications 25 à 32, dans des formulations céramiques.

38. Utilisation des suspensions et des dispersions aqueuses de matières minérales selon l'une des revendications 25 à 32, dans des formulations détergentes

39. Utilisation des suspensions et des dispersions aqueuses de matières minérales selon l'une des revendications 25 à 32, dans des formulations pour le traitement des eaux.

40. Utilisation des suspensions et des dispersions aqueuses de matières minérales selon l'une des revendications 25 à 32, dans des boues de forage.

41. Utilisation des suspensions et des dispersions aqueuses de matières minérales selon l'une des revendications 25 à 32, dans des formulations cosmétiques.

42. Utilisation directe comme agent dispersant des homopolymères de l'acide acrylique et/ou des copolymères de l'acide acrylique avec d'autres monomères hydrosolubles selon une des revendications 1 à 14, dans les formulations papetières, telles que dans la formulation des sauces de couchage et de la charge de masse.

43. Utilisation directe comme agent dispersant des homopolymères de l'acide acrylique et/ou des copolymères de l'acide acrylique avec d'autres monomères hydrosolubles selon une des revendications 1 à 14, dans les formulations de peinture.

44. Utilisation directe comme agent dispersant des homopolymères de l'acide acrylique et/ou des copolymères de l'acide acrylique avec d'autres monomères hydrosolubles selon une des revendications 1 à 14, dans des formulations de ciment.

45. Utilisation directe comme agent dispersant des homopolymères de l'acide acrylique et/ou des copolymères de l'acide acrylique avec d'autres monomères hydrosolubles selon une des revendications 1 à 14, dans des formulations céramiques.

46. Utilisation directe comme agent dispersant des homopolymères de l'acide acrylique et/ou des copolymères de l'acide acrylique avec d'autres monomères hydrosolubles selon une des revendications 1 à 14, dans des formulations pour le traitement des eaux.

47. Utilisation directe comme agent dispersant des homopolymères de l'acide acrylique et/ou des copolymères de l'acide acrylique avec d'autres monomères hydrosolubles selon une des revendications 1 à 14, dans des formulations détergentes.

48. Utilisation directe comme agent dispersant des homopolymères de l'acide acrylique et/ou des copolymères de l'acide acrylique avec d'autres monomères hydrosolubles selon une des revendications 1 à 14, dans des boues de forage.

49. Utilisation directe comme agent dispersant des homopolymères de l'acide acrylique et/ou des copolymères de l'acide acrylique avec d'autres monomères hydrosolubles selon une des revendications 1 à 14, dans des formulations cosmétiques.

50. Utilisation directe comme agent antitartre des homopolymères de l'acide acrylique et/ou des copolymères de l'acide acrylique avec d'autres monomères hydrosolubles selon une des revendications 25 à 38, dans des formulations pour traitement des eaux.

51. Formulations papetières, telles que formulations de sauces de couchage et de charge de masse, contenant les homopolymères de l'acide acrylique et/ou les copolymères de l'acide acrylique avec d'autres monomères hydrosolubles selon l'une des revendications 1 à 14.

52. Formulations de peinture, contenant les homopolymères de l'acide acrylique et/ou les copolymères de l'acide acrylique avec d'autres monomères hydrosolubles selon l'une des revendications 1 à 14.

53. Formulations plastiques, contenant les homopolymères de l'acide acrylique et/ou les copolymères de l'acide acrylique avec d'autres monomères hydrosolubles selon l'une des revendications 1 à 14.

54. Formulations de ciment, contenant les homopolymères de l'acide acrylique et/ou les copolymères de l'acide acrylique avec d'autres monomères hydrosolubles selon l'une des revendications 1 à 14.

55. Formulations céramiques, contenant les homopolymères de l'acide acrylique et/ou les copolymères de l'acide acrylique avec d'autres monomères hydrosolubles selon l'une des revendications 1 à 14.

56. Formulations pour le traitement des eaux, contenant les homopolyméres de l'acide acrylique et/ou les copolymères de l'acide acrylique avec d'autres monomères hydrosolubles selon l'une des revendications 1 à 14.

57. Formulations détergentes, contenant les homopolymères de l'acide acrylique et/ou les copolymères de l'acide acrylique avec d'autres monomères hydrosolubles selon l'une des revendications 1 à 14.

58. Boues de forage, contenant les homopolymères de l'acide acrylique et/ou les copolymères de l'acide acrylique avec d'autres monomères hydrosolubles selon l'une des revendications 1 à 14.

59. Formulations cosmétiques, contenant les homopolymères de l'acide acrylique et/ou les copolymères de l'acide acrylique avec d'autres monomères hydrosolubles selon l'une des revendications 1 à 14.

## Patentansprüche

1. Homopolymere der Acrylsäure und/oder Copolymere der Acrylsäure mit wasserlöslichen Monomeren, **dadurch gekennzeichnet, dass** sie einen Polydispersitätsindex von unter 2,2 aufweisen, bestimmt in wässrigen Medien anhand Anwendung eines Gelpermeationschromatographie-Verfahrens (GPC) mit einer Serie von 5 Natriumpolyacrylat-Standards der Firma Polymer Standard Service, Produktbezeichnungen PAA 18K, PAA 8K, PAA 5K, PAA 4K und PAA 3K, als Standard, und dass sie am Ende der Kette eine der nachfolgenden Formel (I) entsprechende Einheit enthalten: 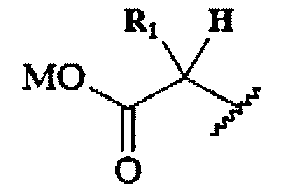
- wobei R₁ für einen Alkylrest mit 1 bis 10 Kohlenstoffatomen, einen gegebenenfalls durch eine Alkylkette mit 1 bis 4 Kohlenstoffatomen substituierten aromatischen Rest steht;
- und wobei M für das Wasserstoffatom, ein Aminsalz, Ammonium oder ein Alkalikation steht,
und **dadurch gekennzeichnet, dass** sie mittels eines kontrollierten radikalischen Polymerisationsverfahrens vom Typ RAFT, im Wasser, unter Verwendung der Verbindungen der folgenden Formel (I') als Übertragungsmittel gewonnen werden: 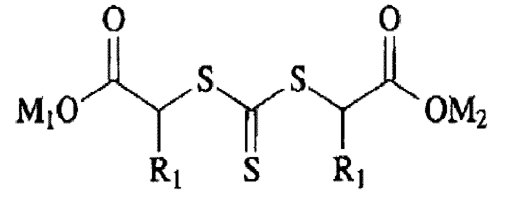
- wobei R₁ für den Alkylrest mit 1 bis 10 Kohlenstoffatomen, einen gegebenenfalls durch eine Alkylkette mit 1 bis 4 Kohlenstoffatomen substituierten aromatischen Rest steht;
- und wobei M₁ und M₂ für das Wasserstoffatom, ein Aminsalz, Ammonium oder ein Alkalikation stehen und gleich oder verschieden sind,
und **dadurch gekennzeichnet, dass** sie eine gewichtsgemittelte Molmasse (M_{w}) zwischen 1 000 g/mol und 100 000 g/mol, vorzugsweise zwischen 1 000 g/mol und 50 000 g/mol, bevorzugterweise zwischen 1 000 g/mol und 30 000 g/mol, äußerst bevorzugterweise zwischen 1 000 g/mol und 20 000 g/mol.

2. Homopolymere der Acrylsäure und/oder Copolymere der Acrylsäure mit wasserlöslichen Monomeren nach Anspruch 1, **dadurch gekennzeichnet, dass** die Amine unter den aliphatischen und/oder cyclischen primären, sekundären oder tertiären Aminen wie das Stearylamin, die Ethylamine (Mono-, Di-, Triethanolamin), das Mono- und Diethylamin, das Cyclohexylamin, das Methylcyclohexylamin, das Aminomethylpropanol, das Morpholin, ausgewählt werden.

3. Homopolymere der Acrylsäure und/oder Copolymere der Acrylsäure mit wasserlöslichen Monomeren nach Anspruch 1, **dadurch gekennzeichnet, dass** die Alkalikationen unter Natrium, Kalium, Lithium ausgewählt werden.

4. Homopolymere der Acrylsäure und/oder Copolymere der Acrylsäure mit wasserlöslichen Monomeren nach einem der Ansprüche 1 bis 3, **dadurch gekennzeichnet, dass** R₁ ein Alkylrest mit 2 bis 6 Kohlenstoffatomen ist und M für das Wasserstoffatom, das Natrium oder das Kalium steht.

5. Homopolymere der Acrylsäure und/oder Copolymere der Acrylsäure mit wasserlöslichen Monomeren nach Anspruch 4, **dadurch gekennzeichnet, dass** R₁ ein Alkylrest mit 2 bis 6 Kohlenstoffatomen ist und M für das Wasserstoffatom oder das Natrium steht.

6. Homopolymere der Acrylsäure und/oder Copolymere der Acrylsäure mit wasserlöslichen Monomeren nach Anspruch 5, **dadurch gekennzeichnet, dass** R₁ ein Alkylrest mit 2 bis 4 Wasserstoffatomen ist und M für das Wasserstoffatom oder das Natrium steht.

7. Homopolymere der Acrylsäure und/oder Copolymere der Acrylsäure mit wasserlöslichen Monomeren nach Anspruch 6, **dadurch gekennzeichnet, dass** R₁ der Alkylrest mit 4 Wasserstoffatomen ist und M für das Wasserstoffatom oder das Natrium steht.

8. Homopolymere der Acrylsäure und/oder Copolymere der Acrylsäure mit wasserlöslichen Monomeren nach Anspruch 7, **dadurch gekennzeichnet, dass** R₁ der Alkylrest mit 4 Wasserstoffatomen ist und M für das Natrium steht.

9. Copolymere der Acrylsäure mit wasserlöslichen Monomeren nach einem der Ansprüche 1 bis 8, **dadurch gekennzeichnet, dass** die wasserlöslichen Monomere unter Methacrylsäure, Itaconsäure, Maleinsäure, 2-Acrylamido-2-Methyl-1-Propansulfonsäure in saurer oder teilneutralisierter Form, 2-Methacrylamido-2-Methyl-1-Propansulfonsäure in saurer oder teilneutralisierter Form, 3-Methacrylamido-2-Hydroxy-1-Propansulfonsäure in saurer oder teilneutralisierter Form, Allylsulfonsäure, Methallylsulfonsäure, Allyloxybenzolsulfonsäure, Methallyloxybenzolsulfonsäure, 2-Hydroxy-3-(2-propenyloxy)Propansulfonsäure, 2-Methyl-2-Propen-1-Sulfonsäure, Ethylensulfonsäure, Propensulfonsäure, Styrolsulfonsäure sowie alle deren Salzen, Vinylsulfonsäure, Natriummethallylsulfonat, Sulfopropylacrylat oder -methacrylat, Sulfomethylacrylamid, Sulfomethylmethacrylamid oder auch unter Acrylamid, Methacrylamid, N-Methylolacrylamid, N-Acryloylmorpholin, Ethylenglykolmethacrylat, Ethylenglykolacrylat, Propylenglykolmethacrylat, Propylenglykolmethacrylat, Methoxypolyethylenglykolacrylat, Methoxypolyethylenglykol-Methacrylat, Propenphosphonsäure, Ethylenglykol- oder Propylenglycolacrylatphosphat oder -methacrylatphosphat oder noch unter Vinylpyrrolidon, Methacrylamidopropyl-Trimethylammoniumchlorid oder -sulfat, Trimethylammoniumethylchlorid-Methacrylat oder Trimethylammoniumethylsulfat-Methacrylat sowie deren Acrylat- oder Acrylamid-Homologen, quaternisiert oder nicht, und/oder Dimethyldiallylammoniumchlorid, sowie Gemischen daraus, gewählt werden.

10. Homopolymere der Acrylsäure und/oder Copolymere der Acrylsäure mit wasserlöslichen Monomeren nach einem der Ansprüche 1 bis 9, **dadurch gekennzeichnet, dass** sie eine gewichtsgemittelte Molmasse (M_{w}) zwischen 1 000 g/mol und 100 000 g/mol, vorzugsweise zwischen 1 000 g/mol und 50 000 g/mol, bevorzugterweise zwischen 1 000 g/mol und 30 000 g/mol, äußerst bevorzugterweise zwischen 1 000 g/mol und 20 000 g/mol, aufweisen, bestimmt in wässrigen Medien anhand eines Gelpermeationschromatographie-Verfahrens (GPC) mit einer Serie von 5 Natriumpolyacrylat-Standards der Firma Polymer Standard Service, Produktbezeichnungen PAA 18K, PAA 8K, PAA 5K, PAA 4K und PAA 3K, als Standard.

11. Homopolymere der Acrylsäure und/oder Copolymere der Acrylsäure mit wasserlöslichen Monomeren nach einem der Ansprüche 1 bis 10, **dadurch gekennzeichnet, dass** sie einen anhand einer Hochleistungsflüssigkeitschromatographie (HPLC) bestimmten Umsatz von über 90 %, vorzugsweise von über 95 %, und bevorzugterweise von über 99 % aufweisen, wobei die Aufbaukomponenten des Gemisches auf einer stationären Phase getrennt und von einem UV-Detektor erfasst werden; nach Kalibrierung des Detektors ermöglicht die der Acrylverbindung entsprechende Peakfläche das Erhalten der Menge der restlichen Acrylsäure.

12. Homopolymere der Acrylsäure und/oder Copolymere der Acrylsäure mit wasserlöslichen Monomeren nach einem der Ansprüche 1 bis 11, **dadurch gekennzeichnet, dass** sie entweder in ihrer sauren Form, d.h. nicht neutralisiert, oder in einer durch ein oder mehrere einwertige, zweiwertige, dreiwertige oder höherwertige Neutralisationsmittel teilneutralisierten oder vollständig neutralisierten Form, oder Gemische daraus, vorliegen.

13. Homopolymere der Acrylsäure und/oder Copolymere der Acrylsäure mit wasserlöslichen Monomeren nach Anspruch 12, **dadurch gekennzeichnet, dass** die einwertigen Neutralisationsmittel aus der Gruppe bestehend aus Alkalikationen enthaltenden Verbindungen, insbesondere Natrium und Kalium, oder auch Lithium, Ammonium oder auch die aliphatischen und/oder cyclischen primären oder sekundären Amine wie beispielsweise die Ethanolamine, Mono- oder Diethylamin oder noch Cyclohexylamin gewählt werden.

14. Homopolymere der Acrylsäure und/oder Copolymere der Acrylsäure mit wasserlöslichen Monomeren nach Anspruch 12, **dadurch gekennzeichnet, dass** die zweiwertigen, dreiwertigen oder höherwertigen Neutralisationsmittel aus der Gruppe bestehend aus den zweiwertige Erdalkalikationen enthaltenden Verbindungen, insbesondere Magnesium und Calcium, oder auch Zink, sowie unter den dreiwertigen Kationen, darunter insbesondere Aluminium, oder noch aus höherwertige Kationen enthaltenden Verbindungen gewählt werden.

15. Verwendung, als Mahlhilfsmittel für Mineralstoffe und/oder als Hilfsmittel zur gemeinsamen Mahlung von Mineralstoffen, von Homopolymeren der Acrylsäure und/oder Copolymeren der Acrylsäure mit wasserlöslichen Monomeren nach einem der Ansprüche 1 bis 14.

16. Verwendung, als Mahlhilfsmittel für Mineralstoffe und/oder als Hilfsmittel zur gemeinsamen Mahlung von Mineralstoffen, von Homopolymeren der Acrylsäure und/oder Copolymeren der Acrylsäure mit wasserlöslichen Monomeren nach Anspruch 15, **dadurch gekennzeichnet, dass** die Mineralstoffe unter natürlichem oder synthetischem Calciumcarbonat, den Dolomiten, Kaolin, Talk, Gips, Titanoxid, einer weißglänzenden Lösung oder auch Aluminiumtrihydroxid, Glimmer und dem Gemisch von mindestens zweien dieser Füllstoffe untereinander, wie beispielsweise die Gemische Talk-Calciumcarbonat, Calciumcarbonat-Kaolin oder auch die Gemische von Calciumcarbonat mit Aluminiumtrihydroxid, oder auch die Gemische mit synthetischen oder natürlichen Fasern, oder auch die Co-Strukturen von Mineralen wie beispielsweise die Co-Strukturen Talk-Calciumcarbonat oder Talk-Titandioxid, gewählt werden.

17. Verwendung, als Mahlhilfsmittel für Mineralstoffe und/oder als Hilfsmittel zur gemeinsamen Mahlung von Mineralstoffen, von Homopolymeren der Acrylsäure und/oder Copolymeren der Acrylsäure mit wasserlöslichen Monomeren nach Anspruch 16, **dadurch gekennzeichnet, dass** die Mineralstoffe ein Calciumcarbonat, gewählt unter Marmor, Kalkspat, Kreide oder Gemischen daraus, sind.

18. Verwendung, als Mahlhilfsmittel für Mineralstoffe und/oder als Hilfsmittel zur gemeinsamen Mahlung von Mineralstoffen, von Homopolymeren der Acrylsäure und/oder Copolymeren der Acrylsäure mit wasserlöslichen Monomeren nach einem der Ansprüche 15 bis 17, **dadurch gekennzeichnet, dass** man von 0,05 bis 5 Trockengewichtsprozent der erfindungsgemäßen Polymere im Verhältnis zum Trockengewicht der Mineralstoffe einsetzt.

19. Verwendung, als Mahlhilfsmittel für Mineralstoffe und/oder als Hilfsmittel zur gemeinsamen Mahlung von Mineralstoffen, von Homopolymeren der Acrylsäure und/oder Copolymeren der Acrylsäure mit wasserlöslichen Monomeren nach Anspruch 18, **dadurch gekennzeichnet, dass** man von 0,1 bis 3 Trockengewichtsprozent der erfindungsgemäßen Polymere im Verhältnis zum Trockengewicht der Mineralstoffe einsetzt.

20. Verwendung, als Dispergiermittel für Mineralstoffe, von Homopolymeren der Acrylsäure und/oder Copolymeren der Acrylsäure mit wasserlöslichen Monomeren nach einem der Ansprüche 1 bis 14.

21. Verwendung, als Dispergiermittel für Mineralstoffe, von Homopolymeren der Acrylsäure und/oder Copolymeren der Acrylsäure mit wasserlöslichen Monomeren nach Anspruch 20, **dadurch gekennzeichnet, dass** die Mineralstoffe unter natürlichem oder synthetischem Calciumcarbonat, den Dolomiten, Kaolin, Talk, Gips, einer weißglänzenden Lösung oder auch Aluminiumtrihydroxid, Glimmer und dem Gemisch von mindestens zweien dieser Füllstoffe untereinander, wie beispielsweise die Gemische Talk-Calciumcarbonat, Calciumcarbonat-Kaolin oder auch die Gemische von Calciumcarbonat mit Aluminiumtrihydroxid, oder auch die Gemische mit synthetischen oder natürlichen Fasern, oder auch die Co-Strukturen von Mineralen wie beispielsweise die Co-Strukturen Talk-Calciumcarbonat oder Talk-Titandioxid, gewählt werden.

22. Verwendung, als Dispergiermittel für Mineralstoffe, von Homopolymeren der Acrylsäure und/oder Copolymeren der Acrylsäure mit wasserlöslichen Monomeren nach Anspruch 21, **dadurch gekennzeichnet, dass** die Mineralstoffe ein Calciumcarbonat, gewählt unter Marmor, Kalkspat, Kreide oder Gemische daraus, sind.

23. Verwendung, als Dispergiermittel für Mineralstoffe, von Homopolymeren der Acrylsäure und/oder Copolymeren der Acrylsäure mit wasserlöslichen Monomeren nach einem der Ansprüche 20 bis 22, **dadurch gekennzeichnet, dass** man von 0,05 bis 5 Trockengewichtsprozent der erfindungsgemäßen Polymere im Verhältnis zum Trockengewicht der Mineralstoffe einsetzt.

24. Verwendung, als Dispergiermittel für Mineralstoffe, von Homopolymeren der Acrylsäure und/oder Copolymeren der Acrylsäure mit wasserlöslichen Monomeren nach Anspruch 23, **dadurch gekennzeichnet, dass** man von 0,1 bis 3 Trockengewichtsprozent der erfindungsgemäßen Polymere im Verhältnis zum Trockengewicht der Mineralstoffe einsetzt.

25. Wässrige Suspensionen von unter Verwendung von Polymeren als Mahlhilfsmittel und/oder als Hilfsmittel zur gemeinsamen Mahlung nach einem der Ansprüche 15 bis 19 gemahlenen und/oder gemahlenen Mineralstoffen, **dadurch gekennzeichnet, dass** die Mineralstoffe unter natürlichem oder synthetischem Calciumcarbonat, den Dolomiten, Kaolin, Talk, Gips, Titanoxid, einer weißglänzenden Lösung oder auch Aluminiumtrihydroxid, Glimmer und dem Gemisch von mindestens zweien dieser Füllstoffe untereinander, wie beispielsweise die Gemische Talk-Calciumcarbonat, Calciumcarbonat-Kaolin oder auch die Gemische von Calciumcarbonat mit Aluminiumtrihydroxid, oder auch die Gemische mit synthetischen oder natürlichen Fasern, oder auch die Co-Strukturen von Mineralen wie beispielsweise die Co-Strukturen Talk-Calciumcarbonat oder Talk-Titandioxid, gewählt werden.

26. Wässrige Suspensionen von unter Verwendung von Polymeren als Mahlhilfsmittel und/oder als Hilfsmittel zur gemeinsamen Mahlung nach Anspruch 25 gemahlenen und/oder gemeinsam gemahlenen Mineralstoffen, **dadurch gekennzeichnet, dass** die Mineralstoffe ein Calciumcarbonat, gewählt unter Marmor, Kalkspat, Kreide oder Gemischen daraus sind.

27. Wässrige Suspensionen von unter Verwendung von Polymeren als Mahlhilfsmittel und/oder als Hilfsmittel zur gemeinsamen Mahlung nach einem der Ansprüche 25 oder 26 gemahlenen und/oder gemeinsam gemahlenen Mineralstoffen, **dadurch gekennzeichnet, dass** man von 0,05 bis 5 Trockengewichtsprozent der Polymere im Verhältnis zum Trockengewicht der Mineralstoffe einsetzt.

28. Wässrige Suspensionen von unter Verwendung von Polymeren als Mahlhilfsmittel und/oder als Hilfsmittel zur gemeinsamen Mahlung nach Anspruch 27 gemahlenen und/oder gemeinsam gemahlenen Mineralstoffen, **dadurch gekennzeichnet, dass** man von 0,1 bis 3 Trockengewichtsprozent der erfindungsgemäßen Polymere im Verhältnis zum Trockengewicht der Mineralstoffe einsetzt.

29. Wässrige Dispersionen von unter Verwendung von Polymeren als Dispergiermittel nach einem der Ansprüche 20 bis 24 gewonnenen Mineralstoffen, **dadurch gekennzeichnet, dass** die Mineralstoffe unter natürlichem oder synthetischem Calciumcarbonat, den Dolomiten, Kaolin, Talk, Gips, einer weißglänzenden Lösung oder auch Aluminiumtrihydroxid, Glimmer und dem Gemisch von mindestens zweien dieser Füllstoffe untereinander, wie beispielsweise die Gemische Talk-Calciumcarbonat, Calciumcarbonat-Kaolin oder auch die Gemische von Calciumcarbonat mit Aluminiumtrihydroxid, oder auch die Gemische mit synthetischen oder natürlichen Fasern, oder auch die Co-Strukturen von Mineralen wie beispielsweise die Co-Strukturen Talk-Calciumcarbonat oder Talk-Titandioxid gewählt werden.

30. Wässrige Dispersionen von unter Verwendung von Polymeren als Dispergiermittel nach Anspruch 29 gewonnenen Mineralstoffen, **dadurch gekennzeichnet, dass** die Mineralstoffe ein Calciumcarbonat, gewählt unter Marmor, Kalkspat, Kreide oder Gemischen daraus sind.

31. Wässrige Dispersionen von unter Verwendung von Polymeren als Dispergiermittel nach einem der Ansprüche 29 oder 30 gewonnenen Mineralstoffen, **dadurch gekennzeichnet, dass** man von 0,05 bis 5 Trockengewichtsprozent der Polymere im Verhältnis zum Trockengewicht der Mineralstoffe einsetzt.

32. Wässrige Dispersionen von unter der Verwendung von Polymeren als Dispergiermittel nach Anspruch 31 gewonnenen Mineralstoffen, **dadurch gekennzeichnet, dass** man von 0,1 bis 3 Trockengewichtsprozent der Polymere im Verhältnis zum Trockengewicht der Mineralstoffe einsetzt.

33. Verwendung der wässrigen Suspensionen und Dispersionen von Mineralstoffen nach einem der Ansprüche 25 bis 32 in Papierformulierungen, wie beispielsweise die Formulierung der Streichmassen und der Füllmasse.

34. Verwendung der wässrigen Suspensionen und Dispersionen von Mineralstoffen nach einem der Ansprüche 25 bis 32 in Farbenformulierungen.

35. Verwendung der wässrigen Suspensionen und Dispersionen von Mineralstoffen nach einem der Ansprüche 25 bis 32 in Kunststoff-Formulierungen.

36. Verwendung der wässrigen Suspensionen und Dispersionen von Mineralstoffen nach einem der Ansprüche 25 bis 32 in Zementformulierungen.

37. Verwendung der wässrigen Suspensionen und Dispersionen von Mineralstoffen nach einem der Ansprüche 25 bis 32 in Keramikformulierungen.

38. Verwendung der wässrigen Suspensionen und Dispersionen von Mineralstoffen nach einem der Ansprüche 25 bis 32 in Wasch- und Reinigungsmittelformulierungen.

39. Verwendung der wässrigen Suspensionen und Dispersionen von Mineralstoffen nach einem der Ansprüche 25 bis 32 in Formulierungen für die Wasseraufbereitung.

40. Verwendung der wässrigen Suspensionen und Dispersionen von Mineralstoffen nach einem der Ansprüche 25 bis 32 in Bohrschlämmen.

41. Verwendung der wässrigen Suspensionen und Dispersionen von Mineralstoffen nach einem der Ansprüche 25 bis 32 in kosmetischen Formulierungen.

42. Unmittelbare Verwendung von Homopolymeren der Acrylsäure und/oder von Copolymeren der Acrylsäure mit anderen wasserlöslichen Monomeren nach einem der Ansprüche 1 bis 14 in Papierformulierungen wie beispielsweise die Formulierung von Streichmassen und der Füllmasse.

43. Unmittelbare Verwendung von Homopolymeren der Acrylsäure und/oder von Copolymeren der Acrylsäure mit anderen wasserlöslichen Monomeren nach einem der Ansprüche 1 bis 14 in Farbenformulierungen.

44. Unmittelbare Verwendung von Homopolymeren der Acrylsäure und/oder von Copolymeren der Acrylsäure mit anderen wasserlöslichen Monomeren nach einem der Ansprüche 1 bis 14 in Zementformulierungen.

45. Unmittelbare Verwendung von Homopolymeren der Acrylsäure und/oder von Copolymeren der Acrylsäure mit anderen wasserlöslichen Monomeren nach einem der Ansprüche 1 bis 14 in Keramikformulierungen.

46. Unmittelbare Verwendung von Homopolymeren der Acrylsäure und/oder von Copolymeren der Acrylsäure mit anderen wasserlöslichen Monomeren nach einem der Ansprüche 1 bis 14 in Formulierungen für die Wasseraufbereitung.

47. Unmittelbare Verwendung von Homopolymeren der Acrylsäure und/oder von Copolymeren der Acrylsäure mit anderen wasserlöslichen Monomeren nach einem der Ansprüche 1 bis 14 in Wasch- und Reinigungsmittelformulierungen.

48. Unmittelbare Verwendung von Homopolymeren der Acrylsäure und/oder von Copolymeren der Acrylsäure mit anderen wasserlöslichen Monomeren nach einem der Ansprüche 1 bis 14 in Bohrschlämmen.

49. Unmittelbare Verwendung von Homopolymeren der Acrylsäure und/oder von Copolymeren der Acrylsäure mit anderen wasserlöslichen Monomeren nach einem der Ansprüche 1 bis 14 in kosmetischen Formulierungen.

50. Unmittelbare Verwendung der Homopolymere der Acrylsäure und/oder der Copolymere der Acrylsäure mit anderen wasserlöslichen Monomeren nach einem der Ansprüche 25 bis 38 als Entkalkungsmittel in Formulierungen für die Wasseraufbereitung.

51. Papierformulierungen wie beispielsweise Formulierungen von Streichmassen und von Füllmasse, enthaltend die Homopolymere der Acrylsäure und/oder die Copolymere der Acrylsäure mit anderen wasserlöslichen Monomeren nach einem der Ansprüche 1 bis 14.

52. Farbenformulierungen, enthaltend die Homopolymere der Acrylsäure und/oder die Copolymere der Acrylsäure mit anderen wasserlöslichen Monomeren nach einem der Ansprüche 1 bis 14.

53. Kunststoff-Formulierungen, enthaltend die Homopolymere der Acrylsäure und/oder die Copolymere der Acrylsäure mit anderen wasserlöslichen Monomeren nach einem der Ansprüche 1 bis 14.

54. Zementformulierungen, enthaltend die Homopolymere der Acrylsäure und/oder die Copolymere der Acrylsäure mit anderen wasserlöslichen Monomeren nach einem der Ansprüche 1 bis 14.

55. Keramikformulierungen, enthaltend die Homopolymere der Acrylsäure und/oder die Copolymere der Acrylsäure mit anderen wasserlöslichen Monomeren nach einem der Ansprüche 1 bis 14.

56. Formulierungen für die Wasseraufbereitung, enthaltend die Homopolymere der Acrylsäure und/oder die Copolymere der Acrylsäure mit anderen wasserlöslichen Monomeren nach einem der Ansprüche 1 bis 14.

57. Wasch- und Reinigungsmittelformulierungen, enthaltend die Homopolymere der Acrylsäure und/oder die Copolymere der Acrylsäure mit anderen wasserlöslichen Monomeren nach einem der Ansprüche 1 bis 14.

58. Bohrschlämme, enthaltend die Homopolymere der Acrylsäure und/oder die Copolymere der Acrylsäure mit anderen wasserlöslichen Monomeren nach einem der Ansprüche 1 bis 14.

59. Kosmetische Formulierungen, enthaltend die Homopolymere der Acrylsäure und/oder die Copolymere der Acrylsäure mit anderen wasserlöslichen Monomeren nach einem der Ansprüche 1 bis 14.

## Claims

1. Homopolymers of acrylic acid and/or copolymers of acrylic acid with water-soluble monomers **characterized in that** they have a polymolecularity index less than 2.2 determined in an aqueous medium by a gel permeation chromatography (GPC) method, having for its standard a series of 5 sodium polyacrylate standards provided by Polymer Standard Service as reference codes PAA 18K, PAA 8K, PAA 5K, PAA 4K and PAA 3K, and contains at the end of the chain a pattern which fulfills formula (I): 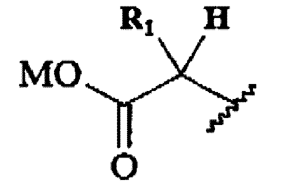
- where R₁ designates an alkyl radical having 1 to 10 carbon atoms, an aromatic radical that may be substituted with an alkyl chain having 1 to 4 carbon atoms;
- and where M designates the hydrogen atom, an amine salt, ammonium, or an alkaline cation,
and **characterized in that** they are obtained by a RAFT radical mediated polymerization method, in water, using as transfer agents compounds with the formula (I'): 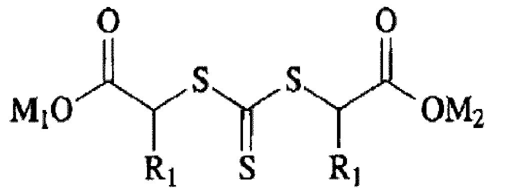
- where R₁ designates an alkyl radical having 1 to 10 carbon atoms, an aromatic radical that may be substituted with an alkyl chain having 1 to 4 carbon atoms;
- and where M₁ and M₂ designate the hydrogen atom, an amine salt, ammonium, or an alkaline cation, and are identical or different,
and **characterised in that** they have an average molecular mass by weight (M_{w}) of between 1000 g/mole and 100,000 g/mole, preferentially between 1000 g/mole and 50,000 g/mole, very preferentially between 1000 g/mole and 30,000 g/mole, and extremely preferentially between 1000 g/mole and 20,000 g/mole.

2. Homopolymers of acrylic acid and/or copolymers of acrylic acid with water-soluble monomers according to claim 1, **characterized in that** the amines are chosen from among the primary, secondary, or tertiary aliphatic and/or cyclic amines such as stearylamine, ethanolamines (mono-, di-triethanolamine), mono- and diethylamine, cyclohexylamine, methylcyclohexylamine, amino-methyl propanol, and morpholine.

3. Homopolymers of acrylic acid and/or copolymers of acrylic acid with water-soluble monomers according to claim 1, **characterized in that** the alkaline cations are chosen from among sodium, potassium, and lithium.

4. Homopolymers of acrylic acid and/or copolymers of acrylic acid with water-soluble monomers according to one of the claims 1 to 3, **characterized in that** R₁ is an alkyl radical having 2 to 6 carbon atoms, and M designates the hydrogen atom, sodium, or potassium.

5. Homopolymers of acrylic acid and/or copolymers of acrylic acid with water-soluble monomers according to claim 4, **characterized in that** R₁ is an alkyl radical having 2 to 6 carbon atoms, and M designates the hydrogen atom or sodium.

6. Homopolymers of acrylic acid and/or copolymers of acrylic acid with water-soluble monomers according to claim 5, **characterized in that** R₁ is an alkyl radical having 2 to 4 carbon atoms, and M designates the hydrogen atom or sodium.

7. Homopolymers of acrylic acid and/or copolymers of acrylic acid with water-soluble monomers according to claim 6, **characterized in that** R₁ is an alkyl radical having 4 carbon atoms, and M designates the hydrogen atom or sodium.

8. Homopolymers of acrylic acid and/or copolymers of acrylic acid with water-soluble monomers according to claim 7, **characterized in that** R₁ is an alkyl radical having 4 carbon atoms, and M designates sodium.

9. Copolymers of acrylic acid with water-soluble monomers according to one of the claims 1 to 8, **characterized in that** the water-soluble monomers are chosen from among methacrylic acid, itaconic acid, maleic acid, 2-acrylamido-2-methyl-1-propane sulfonic acid in an acidic or partially neutralized form, 2-methacrylamido-2-methyl-1-propane sulfonic acid in an acidic or partially neutralized form, 3-methacrylamido-2-hydroxy-1-propane sulfonic acid in an acidic or partially neutralized form, allylsulfonic acid, methallylsulfonic acid, allyloxybenzene sulfonic acid, methallyloxybenzene sulfonic acid, 2-hydroxy-3-(2-propenyloxy)propane sulfonic acid, 2-methyl-2-propene-1-sulfonic acid, ethylene sulfonic acid, propene sulfonic acid, styrene sulfonic acid, as well as all of their salts, vinylic sulfonic acid, sodium methallylsulfonate, sulfopropyl methacrylate or acrylate, sulfomethylacrylamide, or sulfomethylmethacrylamide, or from among acrylamide, methylacrylamide, n-methylolacrylamide, n-acryloylmoipholine, ethylene glycol methacrylate, ehtylene glycol acrylate, propylene glycol methacrylate, propylene glycol acrylate, methoxy-polyethylene glycol acrylate, methoxy polyethylene glycol methacrylate, propene phosphonic acid, acrylate phosphate, or ethylene methacrylate, or propylene glycol, or from among vinylpyrrolidone, methacrylamido propyl trimethyl ammonium chloride or sulfate, trimethylammonium ethyl methacrylate chloride or sulfate, as well as their counterparts in quaternized or non-quarternized acrylate and acrylamide and/or ammonium dimethyldiallylchloride, and mixtures thereof.

10. Homopolymers of acrylic acid and/or copolymers of acrylic acid with water-soluble monomers according to one of the claims 1 to 9, **characterised in that** they have an average molecular mass by weight (M_{w}) of between 1000 g/mole and 100,000 g/mole, preferentially between 1000 g/mole and 50,000 g/mole, very preferentially between 1000 g/mole and 30,000 g/mole, and extremely preferentially between 1000 g/mole and 20,000 g/mole, determined in an aqueous medium by a gel permeation chromatography (GPC) having for its standard a series of 5 sodium polyacrylate standards provided by Polymer Standard Service as reference codes PAA 18K, PAA 8K, PAA 5K, PAA 4K and PAA 3K.

11. Homopolymers of acrylic acid and/or copolymers of acrylic acid with water-soluble monomers according to one of the claims 1 to 10, **characterized in that** they have a conversion rate greater than 90%, preferentially greater than 95%, and very preferentially greater than 99%, determined by high-performance liquid chromatography (HPLC), in which the components that make up the mixture are separated on a stationary phase, and detected by a UV detector; after calibrating the detector, the area of the peak corresponding to the acrylic compound makes it possible to obtain the quantity of residual acrylic acid.

12. Homopolymers of acrylic acid and/or copolymers of acrylic acid with water-soluble monomers according to one of the claims 1 to 11, **characterized in that** they are either in their acidic form, meaning not neutralized, or partially or fully neutralized by one or more monovalent, divalent, trivalent, or higher-valence neutralization agents or mixtures thereof.

13. Homopolymers of acrylic acid and/or copolymers of acrylic acid with water-soluble monomers according to claim 12, **characterized in that** the monovalent neutralization agents are chosen from a group made up of compounds containing alkaline cations, in particular sodium and potassium or lithium, ammonium, or the primary or secondary aliphatic and/or cyclic amines such as ethanolamines mono- and diethylamine, or cyclohexylamine.

14. Homopolymers of acrylic acid and/or copolymers of acrylic acid with water-soluble monomers according to claim 12, **characterized in that** the divalent, trivalent, or higher-valence neutralization agents are chosen from a group made up of compounds containing divalent alkaline earth cations, in particular magnesium and calcium, or zinc, as with trivalent cations, particularly including aluminium or by compounds containing higher-valence cations.

15. The use, as grinding aid agents and/or co-grinding aid agents, of mineral materials, homopolymers of acrylic acid and/or copolymers of acrylic acid with water-soluble monomers, according to one of the claims 1 to 14.

16. The use, as grinding aid agents and/or co-grinding aid agents, of mineral materials, homopolymers of acrylic acid and/or copolymers of acrylic acid with water-soluble monomers according to claim 15, **characterized in that** the mineral materials are chosen from among natural or synthetic carbonate calcium, dolomites, kaolin, talc, gypsum, satin white, or aluminium trihydroxide, mica and the mixture of at least two of these loads, such as mixtures of talc-calcium carbonate, calcium carbonate-kaolin, or mixtures of calcium carbonate with aluminium trihydroxide, or mixtures with synthetic or natural fibres, or co-structures of minerals such as talc-calcium carbonate or talc-titanium dioxide co-structures.

17. The use, as grinding aid agents and/or co-grinding aid agents, of mineral materials, homopolymers of acrylic acid and/or copolymers of acrylic acid with water-soluble monomers according to claim 16, **characterized in that** the mineral materials are a calcium carbonate chosen from among marble, calcite, chalk, or mixtures thereof.

18. The use, as grinding aid agents and/or co-grinding aid agents, of mineral materials, homopolymers of acrylic acid and/or copolymers of acrylic acid with water-soluble monomers according to one of the claims 15 to 17, **characterized in that** 0.05% to 5% by dry weight of the inventive polymers are implemented in relation to the dry weight of the mineral materials.

19. The use, as grinding aid agents and/or co-grinding aid agents, of mineral materials, homopolymers of acrylic acid and/or copolymers of acrylic acid with water-soluble monomers according to claim 18, **characterized in that** 0.1% to 3% by dry weight of the inventive polymers are implemented in relation to the dry weight of the mineral materials.

20. The use, as dispersing agents, of mineral materials, homopolymers of acrylic acid and/or copolymers of acrylic acid with water-soluble monomers according to one of the claims 1 to 14.

21. The use, as dispersing agents, of mineral materials, homopolymers of acrylic acid and/or copolymers of acrylic acid with water-soluble monomers according to claim 20, **characterized in that** the mineral materials are chosen from among natural or synthetic carbonate calcium, dolomites, kaolin, talc, gypsum, satin white, or aluminium trihydroxide, mica and the mixture of at least two of these loads, such as mixtures of talc-calcium carbonate, calcium carbonate-kaolin, or mixtures of calcium carbonate with aluminium trihydroxide, or mixtures with synthetic or natural fibres, or co-structures of minerals such as talc-calcium carbonate or talc-titanium dioxide co-structures.

22. The use, as dispersing agents, of mineral materials, homopolymers of acrylic acid and/or copolymers of acrylic acid with water-soluble monomers according to claim 21, **characterized in that** the mineral materials are a calcium carbonate chosen from among marble, calcite, chalk, or mixtures thereof.

23. The use, as dispersing agents, of mineral materials, homopolymers of acrylic acid and/or copolymers of acrylic acid with water-soluble monomers according to one of the claims 20 to 22, **characterized in that** 0.05% to 5% by dry weight of the inventive polymers are implemented in relation to the dry weight of the mineral materials.

24. The use, as dispersing agents, of mineral materials, homopolymers of acrylic acid and/or copolymers of acrylic acid with water-soluble monomers according to claim 23, **characterized in that** 0.1% to 3% by dry weight of the inventive polymers are implemented in relation to the dry weight of the mineral materials.

25. Aqueous dispersions of mineral materials ground and/or co-ground by using, as a grinding aid agent and/or co-grinding aid agent, polymers according to one of the claims 15 to 19, **characterized in that** the mineral materials are chosen from among natural or synthetic carbonate calcium, dolomites, kaolin, talc, gypsum, satin white, or aluminium trihydroxide, mica and the mixture of at least two of these loads, such as mixtures of talc-calcium carbonate, calcium carbonate-kaolin, or mixtures of calcium carbonate with aluminium trihydroxide, or mixtures with synthetic or natural fibres, or co-structures of minerals such as talc-calcium carbonate or talc-titanium dioxide co-structures.

26. Aqueous dispersions of mineral materials ground and/or co-ground by using, as a grinding aid agent and/or co-grinding aid agent, polymers according to claim 25, **characterized in that** the mineral materials are a calcium carbonate chosen from among marble, calcite, chalk, or mixtures thereof.

27. Aqueous dispersions of mineral materials ground and/or co-ground by using, as a grinding aid agent and/or co-grinding aid agent, polymers according to one of the claims 25 or 26, **characterized in that** 0.05% to 5% by dry weight of the polymers are implemented in relation to the dry weight of the mineral materials.

28. Aqueous dispersions of mineral materials ground and/or co-ground by using, as a grinding aid agent and/or co-grinding aid agent, polymers according to claim 27, **characterized in that** 0.1% to 3% by dry weight of the inventive polymers are implemented in relation to the dry weight of the mineral materials.

29. Aqueous dispersions of mineral materials obtained by using polymers as a dispersing agent according to one of the claims 20 to 24, **characterized in that** the mineral materials are chosen from among natural or synthetic carbonate calcium, dolomites, kaolin, talc, gypsum, satin white, or aluminium trihydroxide, mica and the mixture of at least two of these loads, such as mixtures of talc-calcium carbonate, calcium carbonate-kaolin, or mixtures of calcium carbonate with aluminium trihydroxide, or mixtures with synthetic or natural fibres, or co-structures of minerals such as talc-calcium carbonate or talc-titanium dioxide co-structures.

30. Aqueous dispersions of mineral materials obtained by using polymers as a dispersing agent according to claim 29, **characterized in that** the mineral materials are a calcium carbonate chosen from among marble, calcite, chalk, or mixtures thereof.

31. Aqueous dispersions of mineral materials obtained by using polymers as a dispersing agent according to one of the claims 29 to 30, **characterized in that** 0.05% to 5% by dry weight of the polymers are implemented in relation to the dry weight of the mineral materials.

32. Aqueous dispersions of mineral materials obtained by using polymers as a dispersing agent according to claim 31, **characterized in that** 0.1% to 3% by dry weight of the inventive polymers are implemented in relation to the dry weight of the mineral materials.

33. The use of aqueous dispersions and dispersions of mineral materials according to one of the claims 25 to 32, in paper formulations, such as in the formulation of paper coatings and mass fillers.

34. The use of aqueous dispersions and dispersions of mineral materials according to one of the claims 25 to 32, in paint formulations.

35. The use of aqueous dispersions and dispersions of mineral materials according to one of the claims 25 to 32, in plastic formulations.

36. The use of aqueous dispersions and dispersions of mineral materials according to one of the claims 25 to 32, in cement formulations.

37. The use of aqueous dispersions and dispersions of mineral materials according to one of the claims 25 to 32, in ceramic formulations.

38. The use of aqueous dispersions and dispersions of mineral materials according to one of the claims 25 to 32, in detergent formulations.

39. The use of aqueous dispersions and dispersions of mineral materials according to one of the claims 25 to 32, in water-treatment formulations.

40. The use of aqueous dispersions and dispersions of mineral materials according to one of the claims 25 to 32, in drilling slurries.

41. The use of aqueous dispersions and dispersions of mineral materials according to one of the claims 25 to 32, in cosmetic formulations.

42. The direct use, as a dispersing agent, of homopolymers of acrylic acid and/or copolymers of acrylic acid with other water-soluble monomers according to one of the claims 1 to 14, in paper formulations, such as in the formulation of paper coatings and mass fillers.

43. The direct use, as a dispersing agent, of homopolymers of acrylic acid and/or copolymers of acrylic acid with other water-soluble monomers according to one of the claims 1 to 14, in paint formulations.

44. The direct use, as a dispersing agent, of homopolymers of acrylic acid and/or copolymers of acrylic acid with other water-soluble monomers according to one of the claims 1 to 14, in cement formulations.

45. The direct use, as a dispersing agent, of homopolymers of acrylic acid and/or copolymers of acrylic acid with other water-soluble monomers according to one of the claims 1 to 14, in ceramic formulations.

46. The direct use, as a dispersing agent, of homopolymers of acrylic acid and/or copolymers of acrylic acid with other water-soluble monomers according to one of the claims 1 to 14, in water-treatment formulations.

47. The direct use, as a dispersing agent, of homopolymers of acrylic acid and/or copolymers of acrylic acid with other water-soluble monomers according to one of the claims 1 to 14, in detergent formulations.

48. The direct use, as a dispersing agent, of homopolymers of acrylic acid and/or copolymers of acrylic acid with other water-soluble monomers according to one of the claims 1 to 14, in drilling scurries.

49. The direct use, as a dispersing agent, of homopolymers of acrylic acid and/or copolymers of acrylic acid with other water-soluble monomers according to one of the claims 1 to 14, in cosmetic formulations.

50. The direct use, as an anti-tartar agent, of homopolymers of acrylic acid and/or copolymers of acrylic acid with other water-soluble monomers according to one of the claims 25 to 38, in water-treatment formulations.

51. Paper formulations, such as formulations of paper coatings and mass fillers, containing homopolymers of acrylic acid and/or copolymers of acrylic acid with other water-soluble monomers according to one of the claims 1 to 14.

52. Paint formulations, containing homopolymers of acrylic acid and/or copolymers of acrylic acid with other water-soluble monomers according to one of the claims 1 to 14.

53. Plastic formulations, containing homopolymers of acrylic acid and/or copolymers of acrylic acid with other water-soluble monomers according to one of the claims 1 to 14.

54. Cement formulations, containing homopolymers of acrylic acid and/or copolymers of acrylic acid with other water-soluble monomers according to one of the claims 1 to 14.

55. Ceramic formulations, containing homopolymers of acrylic acid and/or copolymers of acrylic acid with other water-soluble monomers according to one of the claims 1 to 14.

56. Water-treatment formulations, containing homopolymers of acrylic acid and/or copolymers of acrylic acid with other water-soluble monomers according to one of the claims 1 to 14.

57. Detergent formulations, containing homopolymers of acrylic acid and/or copolymers of acrylic acid with other water-soluble monomers according to one of the claims 1 to 14.

58. Drilling slurries, containing homopolymers of acrylic acid and/or copolymers of acrylic acid with other water-soluble monomers according to one of the claims 1 to 14.

59. Cosmetic formulations, containing homopolymers of acrylic acid and/or copolymers of acrylic acid with other water-soluble monomers according to one of the claims 1 to 14.
